# EUROPEAN PATENT SPECIFICATION

(11) **EP 2 063 142 B1**
(45) Date of publication and mention of the grant of the patent: **08.01.2014**
(21) Application number: 08020333.4
(22) Date of filing: 21.11.2008
(51) Int. Cl.: F16D 13/54, F16D 25/02, F16D 43/12, F16D 13/04, F16D 13/72

(54) **Friction clutch**
Reibungskupplung
Embrayage à friction

(30) Priority: 21.11.2007 JP 2007301716; 10.10.2008 JP 2008264596
(43) Date of publication of application: 27.05.2009
(73) Proprietor: Yamaha Hatsudoki Kabushiki Kaisha, Shizuoka-ken Shizuoka 438-8501 (JP)
(72) Inventor: Inomori, Toshinori c/o Yamaha Hatsudoki K.K., Shizuoka-ken 438-8501 (JP); Ishida, Yousuke c/o Yamaha Hatsudoki K.K, Shizuoka-ken 438-8501 (JP)
(74) Representative: Grünecker, Kinkeldey, Stockmair & Schwanhäusser

(56) References cited:
- JP-A- 8 232 981
- JP-A- 52 004 955
- US-A1- 2004 238 315
- US-B1- 6 957 730

## Description

The present invention relates to a friction clutch and a vehicle having the same.

Conventionally, a vehicle which has a friction clutch for engaging/disengaging transmission of engine drive force and a clutch operator for operating a friction clutch has been well known. As an example of a clutch operator, there is a clutch lever of a motorcycle.

Generally, as the size of a vehicle is larger, the capacity of a friction clutch is larger, and force necessary for disengaging a friction clutch is also larger. This increases a burden of a clutch operation. In order to reduce a burden of a clutch operation, a technique for attaching a so-called power-assisting device to a friction clutch is suggested as disclosed in Japanese Laid-Open Patent Application No. 52-004955 or Japanese Patent No. 3381442.

A friction clutch having a power-assisting device disclosed in Japanese Laid-Open Patent Application No. 52-004955 includes a drive force transmission side rotator having a drive force transmission side friction member, a driven force transmission side rotator having a driven force transmission side friction member, and a pressure contact member for receiving urging force of a pressure contact spring to press the drive force transmission side friction member and the driven force transmission side friction member into contact each other. As a power-assisting device, the friction clutch includes an operating side rotator which rotates integrally with the driven force transmission side rotator, an operated side rotator opposite to the operating side rotator through a friction member, and a ball cam for moving a pressure contact member in a direction which separates the drive force transmission side friction member and the driven force transmission side friction member from each other when the operated side rotator receives torque.

This friction clutch, when disengaged, presses the operating side rotator against the operated side rotator through the friction member, transmitting torque to the operated side rotator from the operating side rotator. A ball cam moves the pressure contact member in a direction which separates the drive force transmission side friction member and the driven force transmission side friction member from each other. As a result, the friction clutch uses part of torque of the driven drive force transmission side rotator as force which separates the drive force transmission side friction member and the driven force transmission side friction member from each other. Therefore, force necessary for separating the drive force transmission side friction member and the driven force transmission side friction member from each other, that is, force necessary for disengaging a clutch, can be decreased.

However, the friction clutch has a problem in that a shift-shock is large when a clutch is engaged in an idling state like shifting gears from a neutral to a first gear. That is, since the friction clutch has a power-assisting device, force necessary for disengaging a clutch decreases, but when a clutch is engaged, since the drive force transmission side friction member and the driven force transmission side friction member which are rotating are pressed into contact with each other by the large capacity of the pressing contact spring, a relatively large shock occurs in engaging a clutch. Therefore, there is a problem that a riding feeling deteriorates. The present invention is devised in consideration of the above problems.

Documents US 6,957,730 and US 2004/0238315 disclose centrifugal friction clutches according to the preamble of claim 1.

It is an objective of the present invention to provide a friction clutch which can reduce not only an operational burden necessary for disengaging a clutch, but also a shock occurring when the clutch is engaged in an idling state.

According to the present invention, said objective is solved by a friction clutch, comprising: a drive side rotator having at least one first plate; a driven side rotator having at least one second plate opposite to the first plate in a predetermined direction; a pressure plate configured to rotate together with the drive side rotator and to move in the predetermined direction to contact the first plate and the second plate with each other; a power-assisting mechanism configured to receive a torque of the pressure plate when the friction clutch is disengaged, and to convert the torque into a force for moving the pressure plate to separate the first plate and the second plate from each other; and a centrifugal weight configured to move outward in radial direction of the pressure plate by a movement amount corresponding to a centrifugal force acting on the centrifugal weight and to press the pressure plate in a direction for contacting the first plate and the second plate by a force corresponding to the movement amount.

Since the friction clutch has the power-assisting mechanism, force necessary for disengaging the clutch can be reduced. Further, according to the friction clutch, when rotating at a high speed, a centrifugal weight greatly moves outward in a radial direction to press the pressure plate with relatively large force. As a result, the first plate and second plate contact each other with relatively large force, so that relatively large friction force occurs therebetween. Therefore, the first plate and the second plate can be prevented from slipping, and consequently relative large torque can be effectively transmitted to the driven side rotator from the drive side rotator. Meanwhile, when rotating at a low speed, the centrifugal weight is located in a relatively inner position of a radial direction, and therefore, force with which the centrifugal weight presses the pressure plate is relatively small. Therefore, a shock occurring when the clutch is engaged in an idling state can be decreased.

As described above, a friction clutch which decreases not only an operational burden necessary for disengaging a clutch and but also a shock occurring when a clutch is engaged in an idling state can be achieved.

Preferably, the pressure plate is supported or connected to the drive side rotator to rotate according to the drive side rotator.

Further, preferably a cam face is formed on the pressure plate on an opposite surface facing away from the first plate and the second plate, the cam face being configured to guide the centrifugal weight in a direction to draw apart the first plate and the second plate from each other as the centrifugal weight moves outward in radial direction of the pressure plate.

Still further, preferably the centrifugal weight is located between an abutment member and the pressure plate, said abutment member being configured to apply a repulsive force to the centrifugal weight toward the cam face when the centrifugal weight abuts.

According to a preferred embodiment, the friction clutch comprises a sub clutch including: a friction plate configured to rotate together with the pressure plate and having a first friction surface provided on one side of the predetermined direction and a second friction surface provided on the other side, and, preferably, a pressing member configured to come into contact with the first friction surface and to press the friction plate from one side of the predetermined direction toward the other side when the friction clutch is disengaged, and, preferably, a torque transmission member which is opposite to the second friction surface of the friction plate and which is configured to be pressed into contact with the friction plate pressed by the pressing member to receive torque of the pressure plate and to transmit the torque to the power-assisting mechanism when the friction clutch is disengaged.

Preferably, the drive side rotator is a clutch housing formed in a substantially cylindrical shape, and the driven side rotator is a clutch boss disposed at an inner side of a radial direction of the clutch housing.

Further, preferably the abutment member is supported in the clutch housing, and/or the sub clutch is disposed between the clutch boss and the abutment member with regard to the predetermined direction.

According to another preferred embodiment, a rotation shaft is supported or connected to the driven side rotator to rotate according to the driven side rotator, wherein a hole extends in axial direction of the rotation shaft, and, preferably, an operating shaft is at least partially inserted into the hole of the rotation shaft to push the pressing member from one side of the predetermined direction to the other side when the friction clutch is disengaged.

Preferably, an oil supply path configured to supply oil to the sub clutch is formed inside the operating shaft.

Further, preferably a slide shaft is provided at the other side of the operating shaft and is configured to rotate according to the torque transmission member to transmit torque of the pressure plate to the power-assisting mechanism, and/or a clutch release mechanism is configured to operate the operating shaft to move the pressing member from one side of the predetermined direction to the other side.

Preferably, the torque transmission member includes an outer rod having a hole passing through in axial direction thereof and being configured to rotate in circumferential direction of an axis to transmit torque of the pressure plate to the power-assisting mechanism, and, preferably an inner rod is received by the hole of the outer rod to freely move relative to the outer rod in axial direction and to press the pressing member to the friction plate, and, preferably, a clutch release mechanism is at least partially disposed at the other side of the power-assisting mechanism and is configured to pull the inner rod in axial direction when the friction clutch is disengaged.

Further, preferably the power-assisting mechanism is a ball cam.

Still further, preferably the drive side rotator includes a plurality of first plates, the driven side rotator includes a plurality of second plates, and the plurality of first plates and the plurality of second plates are alternately disposed in the predetermined direction.

There is further provided a vehicle comprising a friction clutch according to one of the above embodiments.

In the following, the present invention is explained in greater detail by means of embodiments thereof in conjunction with the accompanying drawings, wherein:
- Fig. 1: is a side view illustrating a motorcycle;

- Fig. 2: is a diagram illustrating main components of a power unit according to a first embodiment;
- Fig. 3: is a cross-sectional view illustrating a clutch according to the first embodiment;
- Fig. 4: is a cross-sectional view illustrating a push rod driving mechanism;
- Fig. 5: is a view illustrating a power-assisting mechanism according to the first embodiment, and (a) is a back view illustrating a second cam plate, (b) is a surface view illustrating a ball plate, and (c) is a surface view illustrating a first cam plate;
- Fig. 6: is a side view illustrating an ATV;
- Fig. 7: is a top view illustrating an ATV;
- Fig. 8: is a cross-sectional view illustrating a clutch according to a second embodiment; and
- Fig. 9: is a view illustrating a power-assisting mechanism according to the second embodiment, and (a) is a back view illustrating a second cam plate, (b) is a surface view of a ball disposed between a first cam plate and the second cam plate, and (c) is a surface view illustrating the first cam plate.

### Among others, the following reference signs are used in the figures:

- 1: motorcycle (vehicle)
- 2: clutch (friction clutch)
- 33: main shaft (rotation shaft)
- 33a: through hole (hole)
- 41: roller weight (centrifugal weight)
- 42: pinion wheel (clutch release mechanism)
- 43a: short push rod (operating shaft)
- 44: clutch release mechanism
- 44a: outer rod (torque transmission member)
- 44b: inner rod
- 44c: rack (clutch release mechanism)
- 44e: hole
- 46: clutch housing (drive side rotator)
- 48: clutch boss (driven side rotator)
- 64: friction plate (first plate)
- 65: clutch plate (second plate)
- 70: abutment member
- 77: pressure plate
- 81: cam face
- 100: sub clutch
- 101: friction plate
- 101 a: first friction surface
- 101 b: second friction surface
- 102: first pressing plate (pressing member)
- 103: second pressing plate (torque transmission member)
- 110: oil supplying path
- 120: sub clutch
- 121: friction plate
- 121 a: first friction surface
- 121 b: second friction surface
- 122: first pressing plate (pressing member)
- 123: second pressing plate (torque transmission member)
- 200: power-assisting mechanism
- 201: slide shaft
- 240: power-assisting mechanism

Hereinafter, a motorcycle 1 having a friction clutch according to a first embodiment will be described in detail with reference to drawings. Here, a motorcycle 1 and a clutch (friction clutch) 2 which will be described below are merely ones according to preferred embodiments. A vehicle according to the present teaching is not limited to a motorcycle 1. A vehicle according to the present teaching is not limited to a motorcycle, a moped, and a scooter, but may include other vehicles such as an all terrain vehicle (ATV). In addition, in this specification, a motorcycle is referred to as a vehicle of a type which inclines body thereof when taking a turn. A motorcycle is not limited to a two-wheeled vehicle but may include three or more wheels.

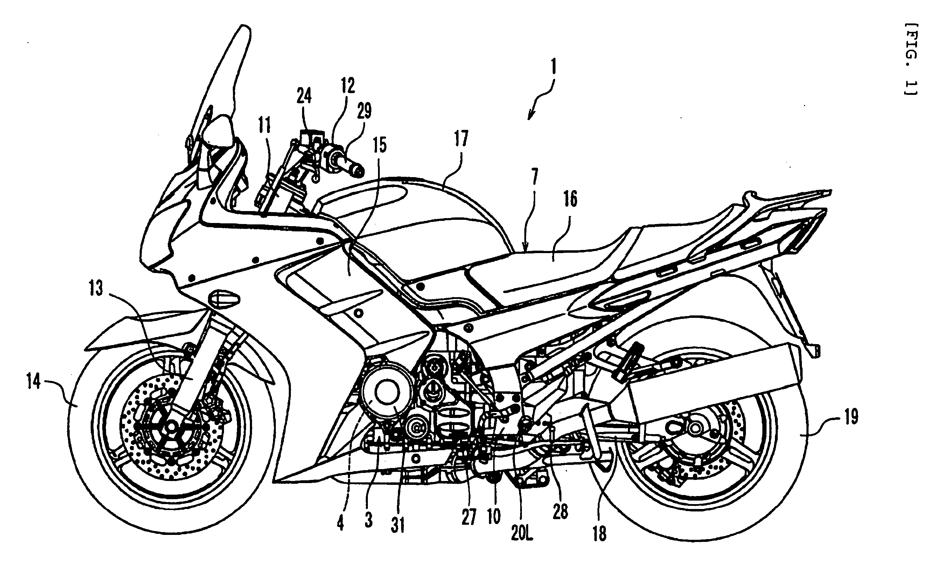

Fig. 1 is a left side view illustrating a motorcycle 1 according to the first embodiment. In the description below, front, back, left and right directions are referred to as directions seen from a position of a driver who sits on a seat 16 which will be described later.

As shown in Fig. 1, the motorcycle 1 includes a vehicle body 7, a front wheel 14 provided at a front side of the vehicle body 7, and a rear wheel 19 provided at a rear side of the vehicle body 7.

The vehicle body 7 includes a vehicle body frame 10. The vehicle body frame 10 includes a head pipe 11. A handle 12 is attached to an upper end of the head pipe 11. Meanwhile, the front wheel 14 is rotatably attached to a lower end of the head pipe 11 through a front fork 13.

A power unit 3 is suspended to the vehicle body frame 10. A vehicle body cover 15 is attached to the vehicle body frame 10. Based on a front-rear direction, a seat 16 is disposed at a back side from an almost center of the vehicle body 7. A fuel tank 17 is disposed in front of the seat 16.

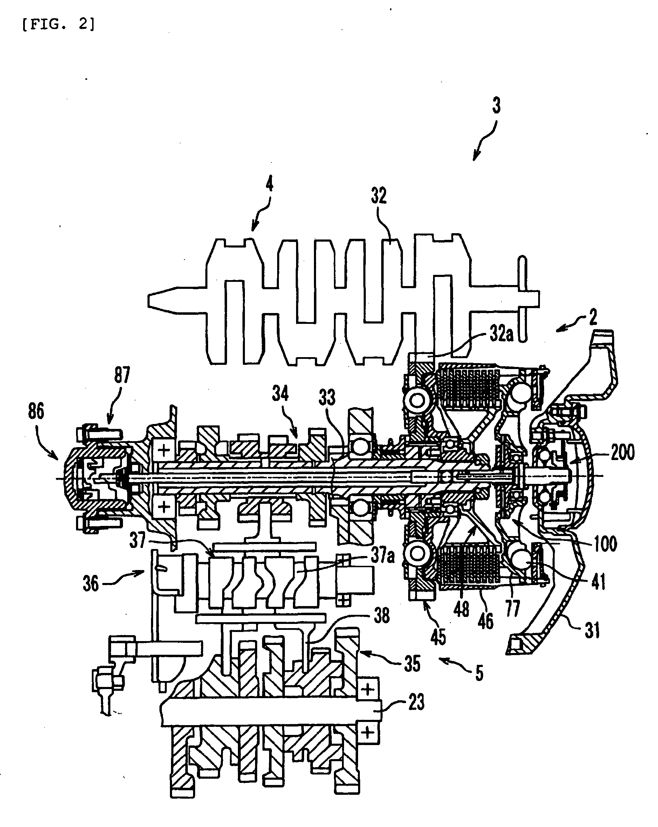

A rear arm 18 is pivotally supported to the vehicle body frame 10. The rear wheel 19 is rotatably attached to a rear end of the rear arm 18. The rear wheel 19 is connected to an engine 4 (see Fig. 2) through a power transmission mechanism which is not shown in the drawing. Drive force of the engine 4 is thereby transmitted to the rear wheel 19 so that the rear wheel 19 rotates.

An accelerator grip which is not shown in the drawing is provided at the right side of the handle 12. A left grip 29 is provided at the left side of the handle 12. A clutch lever 24 operated to engage/disengage a clutch 2 (see Fig. 2) which will be described later is provided in front of the left grip 29 of the handle 12.

Footrests 20L are provided in a central part of in a front-rear direction at both right and left sides of the vehicle body 7. A shift pedal 27 operated to change a transmission gear ratio of a transmission 5 (see Fig. 2) which will be described later is provided at the left side of the vehicle body 7 and slightly before the left footrest 20L. A side stand 28 is provided at the left side of the vehicle body 7 and below the shift pedal 27 and the footrest 20L.

Next, configurations of main components of a power unit 3 will be described with reference to Fig. 2. As shown in Fig. 2, the power unit 3 includes the engine 4, the transmission 5, and the clutch 2. The engine 4 is not limited to a certain type of an engine, and in the embodiment, a water-cooled four-cycle parallel four-cylinder engine is used as the engine 4.

Although not shown, the engine 4 includes four cylinders, pistons each of which reciprocates in each cylinder, and a crankshaft 32 connected to the piston through a connecting rod. The crankshaft 32 extends in a vehicle width direction. A reference numeral 31 denotes a crankcase.

As shown in Fig. 2, the crankshaft 32 is connected to the transmission 5 through the clutch 2. The transmission 5 includes a main shaft (rotation shaft) 33, a drive shaft 23, and a gear selection mechanism 36. The main shaft 33 is connected to the crankshaft 32 through the clutch 2. The main shaft 33 and the drive shaft 23 are disposed parallel to the crankshaft 32, respectively.

A multi-stage transmission gear 34 is mounted on the main shaft 33. Meanwhile, a plurality of transmission gears 35 corresponding to the multi-stage transmission gear 34 is mounted on the drive shaft 23. The multi-stage transmission gear 34 and the plurality of transmission gears 35 are disposed so that only one pair of gears selected are engaged with each other. Either or both of the transmission gear 34 of the multi-stage transmission gear 34 excluding the selected transmission gear 34 and the transmission gear 35 of a plurality of transmission gears 35 excluding the selected transmission gear 35 are rotatable with respect to the main shaft 33 or the drive shaft 23. That is, at least one of the non-selected transmission gear 34 and the non-selected transmission gear 35 runs idle with respect to the main shaft or the drive shaft 23. That is, the rotation between the main shaft 33 and the drive shaft 23 is transmitted only by the selected transmission gear 34 and the selected transmission gear 35 which are engaged with each other.

The transmission gears 34 and 35 are selected by the gear selection mechanism 36. In detail, the transmission gears 34 and 35 are selected by a shift cam 37 of the gear selection mechanism 36. A plurality of cam grooves 37a are formed on an outer circumferential surface of the shift cam 37. A shift fork 38 is mounted on each cam groove 37a. The shift forks 38 are engaged with predetermined transmission gears 34 and 35 of the main shaft 33 and the drive shaft 23, respectively. As the shift cam 37 rotates, a plurality of shift forks 38 are guided into the cam grooves 37a respectively to move in an axial direction of the main shaft 33, so that gears which are engaged with each other are selected from the transmission gears 34 and 35. In detail, among the multi-stage transmission gear 34 and the plurality of transmission gears 35, only one pair of gears located corresponding to a rotation angle of the shift cam 37 are fixed with respect to the main shaft 38 and the drive shaft 23 by a spline. As a result, a location of the transmission gear is determined, and a rotation between the main shaft 33 and the drive shaft 23 is transmitted at a predetermined transmission gear ratio through the transmission gears 34 and 35. The gear selection mechanism 36 is operated by the shift pedal 27 shown in Fig. 1.

In the above-mentioned configuration, after a pair of transmission gears 34 and 35 are fixed to the main shaft 33 and the drive shaft 23 and the clutch 2 is engaged, when the engine 4 is driven, drive force of the engine 4 is transmitted to the main shaft 33 through the clutch 2. The rotation is transmitted at a predetermined transmission gear ratio between the main shaft 33 and the drive shaft 23 through a pair of transmission gears 34 and 35, so that the drive shaft 23 is driven to rotate. When rotation of the drive shaft 23 is driven to rotate, drive force is transmitted by a transmission mechanism (not shown) such as a chain connecting the drive shaft 23 and the rear wheel 19, so that the rear wheel 19 is rotated. In the embodiment, a power transmission mechanism which connects the engine 4 and the rear wheel 19 is configured by a transmission mechanism (not shown) such as the clutch 2, the transmission 5 and the chain.

In the embodiment, the clutch 2 is configured by a friction clutch of a wet multi-plate type. The clutch 2 is a centrifugal clutch which is automatically engaged/disengaged in starting or stopping a motorcycle and also a clutch which is engaged/disengaged by the clutch lever 24 operated by a rider. A configuration of the clutch 2 will be described below with reference to Figs. 2, 3 and 4.

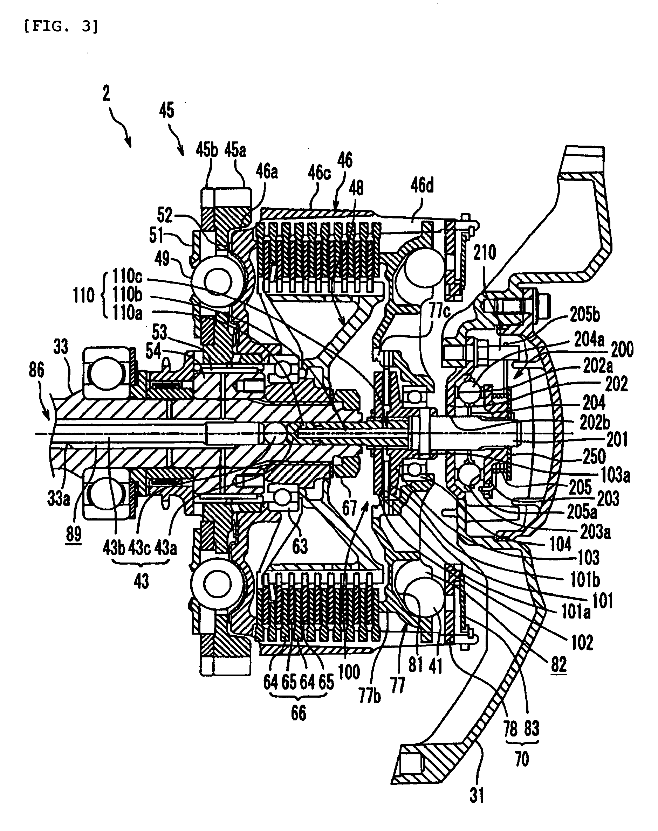

As shown in Fig. 3, the clutch 2 includes a clutch housing (drive side rotator) 46. The main shaft 33 passes through the clutch housing 46. The clutch housing 46 includes a housing body 46c. The housing body 46c is formed in a substantially cylindrical form whose one end is closed by a bottom 46a. The main shaft 33 is inserted through the bottom 46a of the housing body 46c. A plurality of pairs of arms 46d are provided in the housing body 46c. Each arm 46d extends toward the outside with regard to a vehicle width direction from the bottom 46a.

As shown in Fig. 3, a vehicle width direction is referred to as a left-right direction. In the embodiment, the clutch 2 is disposed at the right side of the main shaft 33, and the outside of the vehicle width direction is the right side, and the inside of the vehicle width direction is the left side. Therefore, the outside and the inside of the vehicle width direction are referred to as simply the right side and the left side.

The scissors gear 45 is attached to the clutch housing 46. The scissors gear 45 includes two gears 45a and 45b, a spring 49, and two plates 51 and 52. The gear 45a and the gear 45b are located between the two plates 51 and 52. The two plates 51 and 52 are fixed to each other by a fixture such as a rivet or a screw with respect to an axial direction of the main shaft 33. Therefore, the two gears 45a and 45b are substantially fixed to each other with respect to an axial direction of the main shaft 33. Meanwhile, the gears 45a and 45b are rotatable with respect to a rotational direction.

The gears 45a and 45b have the same number of teeth. The gears 45a and 45b are disposed so that their teeth respectively are located alternately to each other with respect to a circumferential direction. The spring 49 is provided between the gear 45a and the gear 45b. Therefore, torsional torque is applied to the gear 45a and 45b by the spring 49. Therefore, fluctuation torque of the engine 4 is absorbed.

The gear 45a of the scissors gear 45 is engaged with a gear 32a (see Fig. 2) of the crankshaft 32. The gear 45a of the scissors gear 45 is fixed to the bottom 46a of the clutch housing 46 so as to be unrotatable relative thereto. Due to such a configuration, as the crankshaft 32 rotates, the gear 45a of the scissors gear 45 and the clutch housing 46 rotate integrally.

A needle bearing 53 and a spacer 54 fixed unrotatably with respect to the main shaft 33 are disposed between the scissors gear 45 and the main shaft 33. The needle bearing 53 makes the scissor gear 45 rotatable with respect to the main shaft 33. That is, rotation of the scissors gear 45 is not transmitted directly to the main shaft 33.

A clutch boss (driven side rotator) 48 is fixed by a nut 67 so as to be unrotatable with respect to the main shaft 33. That is, the clutch boss 48 rotates together with the main shaft 33. A slide bearing 63 is disposed between the clutch boss 48 and the scissors gear 45. Therefore, a distance between each of the scissors gear 45, the needle bearing 53 and the spacer 54 and the clutch boss 48 is restricted by the slide bearing 63 not to be within a predetermined distance. That is, movement of the scissors gear 45, the needle bearing 53 and the spacer 54 toward the clutch boss 48 in an axial direction of the main shaft 33 is restricted.

A plurality of friction plates 64 are disposed inside the clutch housing 46. Each friction plate 64 is fixed to the clutch housing 46 with respect to a rotational direction of the main shaft 33. A plurality of friction plates 64 rotate together with the clutch housing 46. Each friction plate 64 can be displaced with respect to an axial direction of the main shaft 33. Therefore, a distance between the adjacent friction plates 64 is variable.

A plurality of friction plates (first plates) 64 is disposed in an axial direction of the main shaft 33. A clutch plate (second plate) 65 is disposed between the adjacent friction plates 64. The clutch plate 65 is opposite to the adjacent friction plate 64. Each of the clutch plates 65 is fixed to the clutch boss 48 with respect to a rotational direction of the main shaft 33. Therefore, a plurality of clutch plates 65 rotate together with the clutch boss 48. In addition, each clutch plate 65 can be displaced with respect to an axial direction of the main shaft 33. Therefore, a distance between the adjacent clutch plates 65 is variable.

In the embodiment, a plate group 66 is comprised of the plurality of friction plates 64 and the plurality of clutch plates 65.

A pressure plate 77 is disposed at the right side of the main shaft 33. The pressure plate 77 has a disc-like shape. A sub clutch 100 which will be described later is provided around a central part of the pressure plate 77. An outer end in a radial direction of the pressure plate 77 is engaged with the arm 46d. Therefore, the pressure plate 77 is unable to rotate with respect to the clutch housing 46 and rotates together with the clutch housing 46.

A pressing portion 77b which protrudes toward the plate group 66 is formed on an outer portion in a radial direction of the pressure plate 77. The pressing portion 77b is opposite to the friction plate 64 at the most right side of the plate group 66. As the pressure plate 77 moves to the left, the pressing portion 77b presses the plate group 66 to the left. As a result, the friction plate 64 of the plate group 66 and the clutch plate 65 are pressed into contact with each other.

A cam face 81 which supports a roller weight (centrifugal weight) 41 is formed on a surface of the outer portion in a radial direction of the pressure plate 77 which is opposite to the plate group 66. A plurality of cam faces 81 and a plurality of roller weights 41 are provided along a circumferential direction. A plurality of cam faces 81 are radially disposed around an axial center of the main shaft 33. Each cam face 81 is inclined to face right as it moves outward in a radial direction.

A roller retainer 78 is disposed at the right side of the pressure plate 77. The roller retainer 78 is formed in a shape of orbicular zone viewed in the axial direction of the main shaft 33. The roller retainer 78 is opposite to the cam face 81 of the pressure plate 77. Therefore, a space 82 whose width narrows outward in a radial direction of the main shaft 33 is formed by each cam face 81 and the roller retainer 78.

An outer end in a radial direction of the roller retainer 78 is engaged with a plurality of arms 46d like the pressure plate 77. Therefore, the roller retainer 78 is unable to rotate with respect to the clutch housing 46. That is, the roller retainer 78 rotates together with the clutch housing 46. Meanwhile, the roller retainer 78 can be displaced with respect to the clutch housing 46 in an axial direction of the main shaft 33.

The roller retainer 78 is urged to the left by a disc spring 83 as an urging member. That is, the roller retainer 78 is urged toward the plate group 66 by the disc spring 83. The roller retainer 78 and the disc spring 83 configure an abutment member 70 which presses the roller weight 41 toward the cam face 81.

The roller weights 41 are disposed in a plurality of spaces 82, respectively. The roller weight 41 pivots as the clutch housing 46 rotates, and moves on the cam face 81 outward in a radial direction by centrifugal force generated when it pivots. When the centrifugal force is equal to or more than a predetermined value, the roller weight 41 receives repulsive force from the abutment member 70 to press the pressure plate 77 toward the plate group 66.

In a case where a rotation speed of the crankshaft 32 is lower than a predetermined value, such as an idling state, a rotation speed of the clutch housing 46 also becomes lower. Therefore, centrifugal force applied to the roller weight 41 is relatively small, and so the roller weight 41 is located in the relatively inside portion. Therefore, force which the roller weight 41 presses the pressure plate 77 to the left becomes substantially zero. As a result, the plate group 66 enters a substantially non-contact state where it is not pressed from the pressure plate 77. Therefore, rotation of the clutch housing 46 is not transmitted to the clutch boss 48. That is, the clutch 2 enters a disengaged state.

Meanwhile, as a rotation speed of the crankshaft 32 becomes relatively higher, a rotation speed of the clutch housing 46 also becomes relatively higher. Therefore, as a rotation speed of the clutch housing 46 increases, centrifugal force applied to the roller weight 41 increases. If centrifugal force applied to the roller weight 41 is equal to or more than a predetermined value, the roller weight 41 moves outward. The pressure plate 77 is thereby pressed toward the left side by the roller weight 41 and thus moves toward the plate group 66. As a result, the plate group 66 is pressed into contact with each other, and the clutch 2 enters an engaged state.

When the plate group 66 is pressed into contact with each other and the clutch 2 is engaged as described above, rotation of the clutch housing 46 is transmitted to the clutch boss 48 through the clutch group 66. Therefore, the clutch boss 48 rotates together with the clutch housing 46.

Meanwhile, in a state that the clutch 2 is engaged, if a rotation speed of the crankshaft 32 is lower, centrifugal force applied to the roller weight 41 is smaller. Therefore, the roller weight 41 moves inward in a radial direction. As a result, force that the pressure plate 77 presses the plate group 66 becomes substantially zero, whereby the clutch 2 is disengaged.

As described above, in the motorcycle 1, the centrifugal clutch 2 is provided. Therefore, when it starts or stops, the clutch 2 is automatically engaged/disengaged according to a rotation speed of the engine 4, and so it is unnecessary to operate the clutch lever 24. Therefore, in the motorcycle 1 according to the first embodiment, a rider's operational burden in staring or stopping the motorcycle can be reduced.

As shown in Fig. 3, the clutch 2 according to the present embodiment includes a sub clutch 100. The sub clutch 100 includes a friction plate 101, a first pressing plate (pressing member) 102 opposite to a left surface (hereinafter, first friction surface) 101 a of the friction plate 101, and a second pressing plate (torque transmission member) 103 opposite to a right surface (hereinafter, second friction surface) 101 b of the friction plate 101.

The friction plate 101 is engaged with the pressure plate 77 to rotate together with the pressure plate 77. In detail, a slide arm 77c is formed in the pressure plate 77. Meanwhile, a groove (not shown) is formed in outer portion in a radial direction of the friction plate 101. The groove of the friction plate 101 is slidably engaged with the slide arm 77c, and the friction plate 101 is configured to rotate together with the pressure plate 77.

The first pressing plate 102 is fixed to a short push rod (operating shaft) 43a which will be described later. Therefore, the first pressing plate 102 freely moves together with the short push rod 43a in an axial direction. In addition, the first pressing plate 102 rotates together with the short push rod 43a.

The short push rod 43a is serration-fitted into the second pressing plate 103. Therefore, the second pressing plate 103 rotates together with the short push rod 43a, but can move in an axial direction relative to the short push rod 43a. The second pressing plate 103 has a boss 103a which extends in a right direction. The boss 103a rotatably supports the pressure plate 77 through a bearing 104. Therefore, the second pressing plate 103 and the pressure plate 77 are configured to enable a relative rotation. In addition, the second pressing plate 103 and the pressure plate 77 are configured so that they move integrally in an axial direction

When the short push rod 43a moves to the right, the first pressing plate 102 also moves to the right. The first pressing plate 102 presses the friction plate 101 toward the second pressing plate 103. As a result, the friction plate 101 is fitted between the first pressing plate 102 and the second pressing plate 103. Therefore, torque of the pressure plate 77 is transmitted and applied to the first pressing plate 102 and the second pressing plate 103 through the friction plate 101.

As described later, a through hole (hole) 33a is formed inside the main shaft 33. The short push rod 43a, a ball 43c, and a long push rod 43b of a push mechanism 43 are inserted into the through hole 33a. A gap 89 between an inner sidewall of the through hole 33a and the long push rod 43b functions as an oil supply path for supplying the clutch 2 with oil.

An oil supply path 110 which guides oil in the gap 89 to the sub clutch 100 is formed in the short push rod 43a. The oil supply path 110 includes an oil introducing path 110a formed in the left portion of the short push rod 43a, an oil passage 110b formed in a central portion of the short push rod 43a, and an oil discharge path 110c formed in a right portion of the short push rod 43a. The oil introducing path 110a is a hole which extends in a radial direction and is connected to the oil passage 110b which extends in an axial direction. Similarly, the oil discharge path 110c is a hole which extends in a radial direction and is connected to the oil passage 110b. An outlet of the oil discharge path 110c, i.e., an opening of a radial direction outer portion of the oil discharge path 110c, is opened toward the first friction surface 101 a and the second friction surface 101 b of the friction plate 101. Therefore, oil in the oil supply path 110 is supplied toward the first friction surface 101 a and the second friction surface 101b.

As shown in Fig. 3, the clutch 2 according to the present embodiment includes a power-assisting mechanism 200. The power-assisting mechanism 200 converts part of torque of the pressure plate 77 into force which disengages the clutch 2 and decreases force necessary for disengaging the clutch 2. The power-assisting mechanism 200 according to the present embodiment is configured by a so-called ball cam. The power-assisting mechanism 200 includes a slide shaft 201 fixed to the second pressing plate 103, a first cam plate 202, a second cam plate 203, a ball plate 204, and a coil spring 205 which urges the second cam plate 203 in a direction which separates the second cam plate 203 from the first cam plate 202. A supporting plate 250 which supports the coil spring 205 by coming into contact with the right portion of the coil spring 204 is fixed to a distal end of the slide shaft 201.

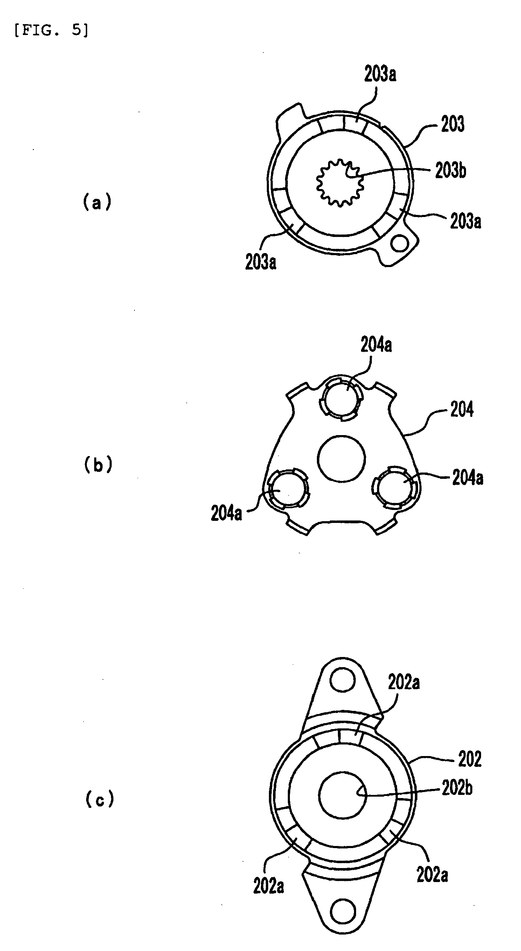

As shown in Fig. 5(b), three balls 204a are rollably supported by the ball plate 204. The three balls 204a are equally disposed along a circumferential direction around an axial center of the slide shaft 201. Here, the number of balls 204a supported by the ball plate 204 is not limited to three.

As shown in Fig. 5(c), a through hole 202b is formed in a center of the first cam plate 202. As shown in Fig. 3, the slide shaft 201 is inserted through the through hole 202b. The slide shaft 201 freely moves in an axial direction and freely rotates with respect to the first cam plate 202. That is, the first cam plate 202 is configured not to rotate even though the slide shaft 201 rotates.

As shown in Fig. 5(a), a serration hole 203b is formed in a center of the second cam plate 203. The slide shaft 201 is serration-fitted into the second cam plate 203. Therefore, the second cam plate 203 freely moves in an axial direction with respect to the slide shaft 201 but rotates together with the slide shaft 201.

One end 205a of the coil spring 205 is latched onto the second cam plate 203. The other end 205b of the coil spring 205 is latched onto a pin 210 fixed to a crankcase 31. Therefore, the second cam plate 203 receives torque which rotates around the slide shaft 201 from the coil spring 205. The second cam plate 203 receives slide force which moves the second cam plate 203 toward the first cam plate 202 in an axial direction of the slide shaft 201 from urging force of both the disc spring 83 and the coil spring 205.

A first cam face 202a is formed on a right surface (a front surface in Fig. 5(c)) of the first cam plate 202. A second cam face 203a is formed on a left surface (a front surface in Fig. 5(a)) of the second cam plate 203. The first cam face 202a and the second cam face 203a are formed so that a ball 204a moves up from between both cam faces 202a and 203a when the second cam plate 203 rotates in a predetermined direction, and the ball 204a is received between both cam faces 202a and 203a when the second cam plate 203 rotates in a reverse direction of the predetermined direction. In other words, when the second cam plate 203 rotates in a predetermined direction against total urging force of the disc spring 83 and the coil spring 205, both cam faces 202a and 203a are pressed by the ball 204a to be separated from each other, so that the second cam plate 203 moves to the right. In addition, when the second cam plate 203 rotates in a reverse direction, both cam faces 202a and 203a move to the left due to total urging force of the disc spring 83 and the coil spring 205.

A clutch release mechanism 86 is provided in the clutch 2 according to the first embodiment. The clutch release mechanism 86 releases a pressed-contact state of the plate group when a rider of the motorcycle 1 operates the clutch lever 24. Thanks to the clutch release mechanism 86, the clutch 2 can be disengaged by a manual operation of a rider of the motorcycle 1.

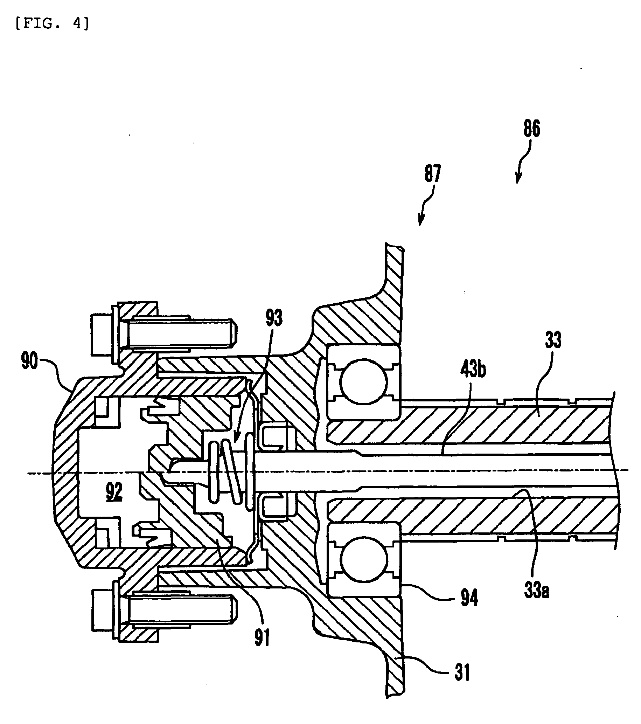

The clutch release mechanism 86 includes a push mechanism 43 (see Fig. 3) and a driving mechanism 87 (see Fig. 4) which drives the push mechanism 43. As shown in Fig. 3, the push mechanism 43 includes a short push rod 43a, a long push rod 43b and a ball 43c interposed between the short push rod 43a and the long push rod 43b. The through hole 33a is formed inside the main shaft 33, and the push mechanism 43 is disposed in the through hole 33a. The through hole 33a also functions as an oil supplying hole through which oil is supplied to the respective sliding portions of the clutch 2. In detail, oil is supplied to the respective sliding portions of the clutch 2 through the gap 89 between the inner sidewall of the through hole 33a and the push mechanism 43.

A right end of the short push rod 43a protrudes from the main shaft 33 and is attached to the first pressing plate 102 of the sub clutch 100. Therefore, when the sub clutch 100 is connected, the short push rod 43a rotates integrally with the pressure plate 77. In addition, when the sub clutch 100 and the clutch 2 are connected, the short push rod 43a rotates together with the clutch housing 46. Meanwhile, the long push rod 43b does not rotate together with the main shaft 33. Therefore, the ball 43c is provided between the short push rod 43a and the long push rod 43b, so that sliding resistance between the short push rod 43a and the long push rod 43b is reduced.

Fig. 4 is a cross-sectional view illustrating the driving mechanism 87. As shown in Fig. 4, a left end of the long push rod 43b is positioned at a left side of a left end of the main shaft 33 to thereby extend to the driving mechanism 87. A portion of Fig. 4 below an axial center of the main shaft 33 shows a state that the clutch release mechanism 86 is not driven. In other words, a portion of Fig. 4 below an axial center of the main shaft 33 shows a state that the push mechanism 43 is located at the relatively left side, and the pressure plate 77 is not displaced to the right by the push mechanism 43. Meanwhile, a portion of Fig. 4 above an axial center of the main shaft 33 shows a state the clutch release mechanism is driven. That is, a portion of Fig. 4 above an axial center of the main shaft 33 shows a state that the push mechanism 43 is located at the relatively right, and the pressure plate 77 is displaced to the right by the push mechanism 43.

As shown in Fig. 4, the driving mechanism 87 includes a cylinder 90 and a piston 91. The piston 91 slidably moves with respect to the cylinder 90 in an axial direction of the main shaft 33. The piston 91 is attached to the long push rod 43b. Therefore, as the piston 91 slides, the long push rod 43b also moves in an axial direction of the main shaft 33.

A operating chamber 92 is formed between the piston 91 and the cylinder 90. The operating chamber 92 is filled with oil.

A helical compression spring 93 is disposed between the piston 91 and the crankcase 31. The piston 91 is urged to the left by the helical compression spring 93. That is, the push mechanism 43 is displaced to be urged in a direction that the clutch 2 is engaged. Therefore, when an operation of the clutch lever 24 (see Fig. 1) is released by a rider of the motorcycle 1, the push mechanism 43 automatically moves to the left.

Next, an operation of the clutch 2 will be described. An operation for disengaging the clutch 2 will be first described.

If a rider of the motorcycle 1 grips the clutch lever 24 (see Fig. 1), internal pressure of the operating chamber 92 of the driving mechanism 87 increases. The piston 91 thereby moves to the right, and the long push rod 43b also moves to the right. The ball 43c and the short push rod 43a also move to the right, and the first pressing plate 102 of the sub clutch 100 moves to the right. The friction plate 101 of the sub clutch 100 is thereby fitted between the first pressing plate 102 and the second pressing plate 103, so that the sub clutch 100 enters an engaged state. As a result, the slide shaft 201 of the power-assisting mechanism 200 rotates together with the pressure plate 77 in a predetermined direction.

If the slide shaft 201 rotates in a predetermined direction, the second cam plate 203 of the power-assisting mechanism 200 rotates in the same direction. The ball 204a of the ball plate 204 moves up from between the first cam face 202a and the second cam face 203a, and the second cam plate 203 is pressed to the right by the ball 204a. Therefore, the slide shaft 201 is also pressed to the right. As a result, the pressure plate 77 moves to the right due to force that the short push rod 43a pushes the pressure plate 77 to the right through the first pressing plate 102 and the friction plate 101 and force that the slide shaft 201 pulls the pressure plate 77 to the right through the second pressing plate 103 and the bearing 104. Accordingly, a pressed-contact state of the plate group 66 is released, so that the clutch is disengaged.

The second cam plate 203 is restricted not to rotate by equal to more than a predetermined amount. Therefore, in a state that the clutch 2 is disengaged, the friction plate 101 rotates with respect to the first pressing plate 102 and the second pressing contact 103. That is, the friction plate 101 slides with respect to the first pressing plate 102 and the second pressing contact 103. However, since oil is supplied to the first friction surface 101a and the second friction surface 101b of the friction plate 101, abrasion of the friction plate 101 is suppressed.

Next, an operation for engaging the clutch 2 will be first described.

In order to engage the clutch 2, a rider releases the clutch lever 24 he or she grips. Then, internal pressure of the operating chamber 92 of the driving mechanism 87 decreases. The piston 91 and the long push rod 43b thereby move to the left. Then, the ball 43c and the short push rod 43a also move to the left, and the first pressing plate 102 of the sub clutch 100 moves to the left. The first pressing plate 102 of the sub clutch 100 is thereby separated from the friction plate 101. In addition, the second pressing plate 103 becomes hard to be pushed to the right by the first pressing plate 102. Therefore, rightward pressing force with respect to the slide shaft 201 disappears, and the second cam plate 203 which receives urging force of the coil spring 205 rotates in a reverse direction, so that the second cam plate 203 and the slide shaft 201 move to the left. As a result, the second pressing plate 103 also moves to the left.

In addition, the pressure plate 77 moves to the left by urging force of the disc spring 83 and the like because rightward pressing force by the first pressing plate 102 is released. As a result, the plate group 66 is pressed into contact with each other by the pressure plate 77, so that the clutch 2 is engaged. At this time, the friction plate 101 of the sub clutch 100 is separated from the second pressing plate 103.

In the clutch 2 according to the first embodiment, urging force which the pressure plate 77 receives from the disc spring 83 changes depending on a radial direction position of the roller weight 41. In detail, if a rotation speed of the pressure plate 77 is high, the roller weight 41 moves outward in a radial direction. As a result, the roller weight 41 moves to the right to greatly transform the disc spring 83. Therefore, urging force which the pressure plate 77 receives from the disc spring 83 relatively increases because the disc spring 83 is greatly transformed by the roller weight 41 without increasing an elastic coefficient of the disc spring 83 itself. Meanwhile, if a rotation speed of the pressure plate 77 is low, the roller weight 41 moves inward in a radial direction. As a result, the roller weight 41 moves to the left, the transformation of the disc spring 83 decreases. Therefore, so urging force which the pressure plate 77 receives from the disc spring 83 becomes relatively smaller.

If an engine speed is high, the pressure plate 77 needs to press the plate group 66 into contact with each other with large pressing force. In the clutch 2 according to the first embodiment, as an engine speed is higher, the roller weight 41 moves outward in a radial direction, and so the transformation of the disc spring 83 increases. Therefore, sufficient pressing force can be obtained without increasing an elastic coefficient of the disc spring 83 is not greatly increased. Therefore, the elastic coefficient of the disc spring 83, that is, the spring capacity, can be suppressed relatively small.

However, when rotating at a low speed such as an idling state, the roller weight 41 moves inward in a radial direction, and so it enters a state which the pressure plate 77 does not press the plate group 66 into contact with each other. That is, it enters a disengaged state. If an engine speed increases in an idling state, the roller weight 41 moves outward in a radial direction, and so it enters a state which the pressure plate 77 presses the plate group 66 into contact with each other. That is, it enters an engaged state. However, in the clutch 2 according to the first embodiment, since the elastic coefficient of the disc spring 83 is relatively small, an engine speed is not very high at the moment when the clutch is engaged and the transformation of the disc spring 83 is relatively small, force that the pressure plate 77 presses the plate group 66 into contact with each other is also relatively small. Therefore, the plate group 66 is not abruptly pressed into contact with each other, and the clutch 2 is smoothly engaged.

As described above, according to the first embodiment, the clutch 2 includes a power-assisting mechanism 200 and so can reduce force necessary for disengaging the clutch 2. The clutch 2 also includes a roller weight 41 which moves outward in a radial direction by the movement amount according to the magnitude of centrifugal force and presses the pressure plate 77 toward the plate group 66 with force according to the movement amount. Therefore, if an engine speed is high, the roller weight 41 moves outward in a radial direction, so that force that the pressure plate 77 presses the plate group 66 into contact with each other can be made relatively large. Therefore, even though an engine speed is high, slipping in the plate group 66 can be prevented, and power transmission efficiency of the clutch 2 can be improved. Meanwhile, if an engine speed is low, the roller weight 41 moves inward in a radial direction, so that force that the pressure plate 77 presses the plate group 66 into contact with each other can be kept relatively small. Therefore, a shock occurring when the clutch 2 is engaged in an idling state can be reduced. Therefore, the clutch 2 according to the present embodiment can reduce not only an operational load for disengaging the clutch can be reduced but also a shock occurring when the clutch 2 is engaged in an idling state.

According to the first embodiment, the pressure plate 77 is supported to or connected to the clutch housing 46 to rotate according to the clutch housing 46. The cam face 81 which guides the roller weight 41 rightward as it moves more outward in a radial direction is formed on a right surface of the pressure plate 77. The clutch 2 includes an abutment member 70 which is disposed at a location opposite to the cam face 81 of the pressure plate 77 through the roller weight 41. The abutment member 70 applies repulsive force which goes to the cam face 81 to the roller weight 41 when the roller weight 41 abuts on it.

The pressure plate 77 has a function which presses the plate group 66 into contact with each other and a function which supports and guides the roller weight 41. Therefore, there is no need for separately providing a member for pressing the plate group 66 into contact with each other and a member for supporting and guiding the roller weight 41. Accordingly, according to the first embodiment, the number of components of the clutch 2 can be decreased, and it is possible to make the clutch 2 compact.

In addition, according to the first embodiment, the clutch 2 includes a sub clutch 100. The sub clutch 100 includes the friction plate 101 provided to rotate together with the pressure plate 77, the first pressing plate 102 which comes into contact with the first friction surface 101 a of the friction plate 101 when the clutch is disengaged to press the pressure plate 101 to the right, and the second pressing plate 103 which comes into contact with the second friction surface 101 b of the friction plate 101 when the clutch is disengaged and is pressed into contact with the pressure plate 101 to receive torque from the pressure plate and transmits the torque to the power-assisting mechanism 200.

As described above, the pressure plate 101 includes the two friction surfaces 101 a and 101 b. Therefore, torque can be efficiently transmitted to the power-assisting mechanism 200 from the pressure plate 77.

In the first embodiment, the sub clutch 100 is disposed between the clutch boss 48 and the abutment member 70 with respect to an axial direction of the main shaft 33. That is, a space between the clutch boss 48 and the abutment member 70 is effectively used as an installation space for the sub clutch 100. Therefore, it is possible to make the clutch 2 compact.

Further, the clutch 2 according to the present embodiment includes a main shaft 33 supported to or connected to the clutch boss 48 to rotate according to the clutch boss 48, and the through hole 33a which extends in an axial direction is formed inside the main shaft 33. The clutch 2 also includes a push mechanism 43, and the push mechanism 43 includes a short push rod 43a that at least part thereof is inserted into the through hole 33a to push the first pressing plate 102 to the right when the clutch is disengaged. The oil supplying path 110 which supplies oil to the sub clutch 100 is formed inside the short push rod 43a.

As described above, according to the first embodiment, oil can be supplied directly to the sub clutch 100 through the oil supplying path 110. That is, not only oil dispersed in the crankcase 31 is supplied to the sub clutch 100, but also oil can be actively supplied to the sub clutch 100 through the oil supplying path 110. Therefore, since the sufficient amount of oil can be supplied to the sub clutch 100, abrasion of the sub clutch 100 can be suppressed.

In the clutch 2 according to the first embodiment, the power-assisting mechanism 200 is configured by a ball cam. Therefore, the power-assisting mechanism 200 can be reduced in size. The power-assisting mechanism 200 is not limited to a ball cam but may be one with other configurations can be employed.

The clutch 2 according to the present embodiment is a multi-plate type clutch that a plurality of friction plates 64 and a plurality of clutch plates 65 are alternately disposed. However, the clutch 2 may be a single-plate type clutch which includes a single friction plate and a single clutch plate or a friction clutch of another type which transmits drive force with frictional force. However, a multi-plate type clutch is typically larger in clutch capacity than a single-plate type clutch. In other words, drive force transmitted through the clutch is larger. Therefore, the above-described effects of reducing both an operational load in disengaging the clutch and a shock occurring when the clutch 2 is engaged in an idling state are remarkably obtained.

In the modification of the first embodiment, the pressure plate 77 enters a state where it does not press the plate group 66 into contact with each other, or a disengaged state, at a low speed such as an idling state. However, by adjusting urging force of the disc spring 83 and the coil spring 205, even at a low speed rotation such as an idling state, the pressure plate 77 presses the plate group 66 into contact with each other to be able to enter a so-called partially applied clutch state.

In addition, an engine speed in engaging the clutch 2, that is, a so-called meet point of the clutch 2 can be changed by adjusting urging force of the disc spring 83 and the coil spring 205.

As described above, the second cam plate 203 receives sliding force which moves itself toward the first cam plate 202 in an axial direction of the slide shaft 201 by total urging force of the disc spring 83 and the coil spring 205. In detail, the coil spring 205 urges the first cam plate 202 and the second cam plate 203 in an axial direction of the slide shaft 201 which separates them from each other. That is, the coil spring 205 urges the second cam plate 203 and the slide shaft 201 to the right. What the slide shaft 201 is urged to the right by the coil spring 205 means that the second pressing plate 103 is urged to the right by the coil spring 205. As described above, the second pressing plate 103 and the pressure plate 77 move integrally in an axial direction through the bearing 104. Therefore, the coil spring 205 urges the pressure plate 77 to the right.

The disc spring 83 urges in a direction that the pressure plate 77 presses the plate group 66 into contact with each other. That is, the disc spring 83 urges the pressure plate 77 to the left. Urge force of the disc spring 83 is larger than urging force of the coil spring 205. Therefore, the pressure plate 77 can press the plate group 66 into contact with each other by using centrifugal force of the roller weight 41. Meanwhile, force that the pressure plate 77 presses the plate group 66 into contact with each other is adjusted by adjusting urging force of the disc spring 83 and the coil spring 205. It is thereby possible to change an engine speed when the clutch 2 is engaged, that is, to change a so-called meet point of the clutch 2.

In the first embodiment, as a mechanism for moving the pressure plate 77 in an axial direction according to a state of the clutch 2, a so-called inner push type, which extends in an axial direction inside the main shaft 33, is used. In the mechanism of the inner push type according to the first embodiment, the slide shaft 201 is pushed in an axial direction of the short push rod 43a which passes through the inside the main shaft 33 to move in an axial direction. The mechanism is not limited to the inner push type. In a second embodiment, a so-called outer pull type, which does not pass through as the mechanism. Hereinafter, the mechanism according to the present embodiment will be described.

Hereinafter, ATV9 having the friction clutch according to the present embodiment will be described in detail with reference to the drawings. However, ATV9 and the clutch 2 which will be described below are examples of the preferred embodiment. A vehicle according to the present embodiment is not limited to ATV9. A vehicle according to the present embodiment may include a motorcycle, a moped, and a scooter.

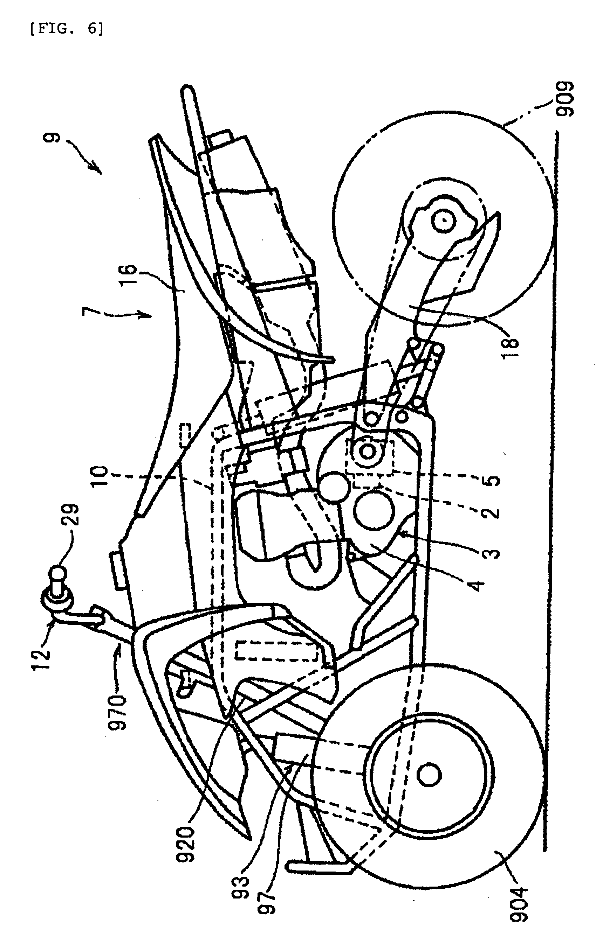

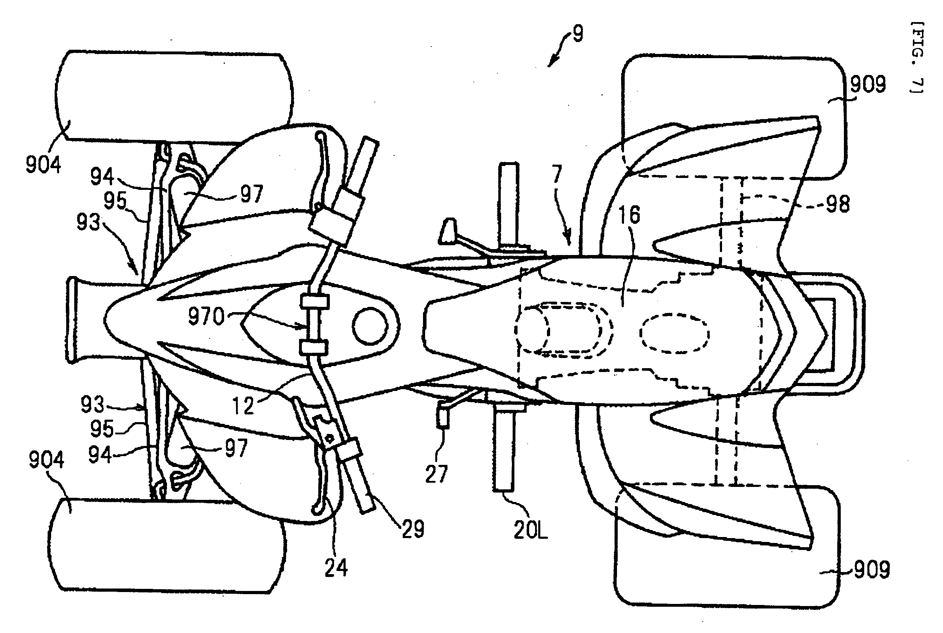

Fig. 6 is a left side view illustrating the ATV9 according to the second embodiment. Fig. 7 is a top view illustrating the ATV9 according to the second embodiment. In the first and second embodiments, like reference numerals denote like parts, and so duplicated description will not be repeated.

The ATV9 includes a vehicle body 7, a pair of right and left front suspensions 93, and a pair of right and left rear suspensions 98. The front suspension 93 is provided in a front portion of the vehicle body 7 and includes an upper arm 94, a lower arm 95, a steering knuckle (not shown), and a bumper 97. The upper arm 94 and the lower arm 95 are pivoted vertically to a front portion of a vehicle body frame 10, respectively. The steering knuckle is supported to pivoting ends of the upper arm 94 and the lower arm 95. A front wheel 904 is rotatably and steerably supported to the steering knuckle. The bumper 97 is provided in a front portion of the vehicle body frame 10 and the lower arm 95. A pair of right and left rear wheels 909 are suspended from the rear suspension 98 in a rear portion of the vehicle body 7. The rear suspension 98 includes a bumper 96 and a rear arm 18.

Further, the ATV9 includes a steering system 970. The steering system 970 includes a steering shaft 920 and a handle 12. The steering shaft 920 is supported to the vehicle body frame 10 to freely pivot around an axis center. The steering shaft 920 extends backward and upward from a front lower side of the vehicle body frame 10 to be backwardly inclined. The handle 12 is attached to a top portion of the steering shaft 920.

In addition, a power unit 3 is supported to the vehicle body frame 10. The power unit 3 includes an engine 4, a clutch 2, and a transmission 5.

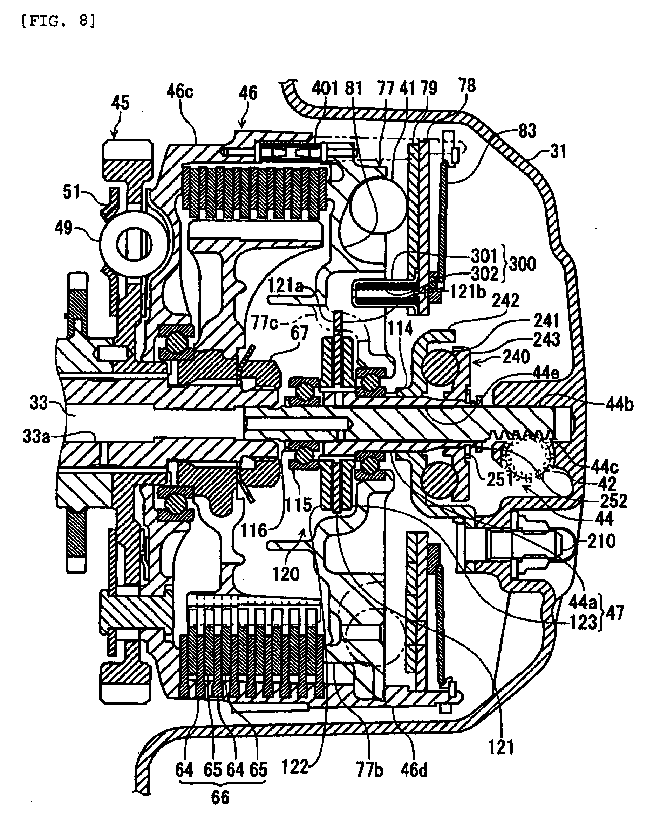

Fig. 8 shows the clutch 2 according to the second embodiment. In the first and second embodiments, like reference numerals denote like parts, and thus duplicated description will not be repeated.

As shown in Fig. 8, a roller retainer 78 is disposed at a right side of a pressure plate 77. A spring holder 301 of an elastic member 300 is fixed to the roller retainer 78. The elastic member 300 includes the spring holder 301 and a spring 302.

The roller retainer 78 is urged to the left by a disc spring 83 as a urging member. That is, the roller retainer 78 is urged toward a plate group 66 by the disc spring 83. An elastic member retainer 79 is disposed between the pressure plate 77 and the roller retainer 78.

The elastic member retainer 79 is a plate and is formed in an annulus shape when it is seen in an axial direction of the main shaft 33. An outer end of a radial direction of the elastic member retainer 79 is engaged with an arm 46d. The elastic member retainer 79 is thereby unable to rotate with respect to the clutch housing 46 and rotates together with the clutch housing 46.

The spring holder 301 is fixed to the elastic member retainer 79. The spring holder 301 has a cylindrical shape. One end of the spring 302 is fixed to the roller retainer 78. The other end of the spring 302 contacts a cylindrical head portion inside the spring holder 301. The spring holder 301 passes through the elastic member retainer 79. The spring holder 301 passes through the roller retainer 78 to be fixed to the elastic member retainer 79. The spring 302 is encapsulated in a more extended state than its original length inside the tube of the spring holder 301. That is, the spring 302 urges the roller retainer 78 to the left by urging force of a direction that the spring returns to the original shape. The roller retainer 78 and the elastic member retainer 79 always contact each other with a bottom of the spring holder 301 interposed therebetween. The pressure plate 77 is urged to the left by the roller weight 41 by urging force of the spring 302 to press the plate group 66 into contact with each other.

As shown in Fig. 8, the clutch 2 according to the present embodiment includes an off-spring 401. The off-spring 401 is provided in a radial direction outer portion of the clutch housing 46 and is provided between a housing body 46c and the pressure plate 77 with respect to an axial direction of the main shaft 33. The off-spring 401 extends in an axial direction of the main shaft 33 between the housing body 46c and the pressure plate 77. A plurality of off-springs 401 are provided between the housing body 46c and the pressure plate 77. As described above, the housing body 46c is formed in a cylindrical shape. A plurality of off-springs 401 are symmetrically disposed based on a predetermined imaginary straight line which passes through a center of the main shaft 33 when they are seen from an axial cross section of the main shaft 33. The number of off-springs 401 is not limited to a certain number. Therefore, if each of the three off-springs 401 are provided, three off-springs 401 are disposed at a rotation angle interval of 120° along an outer cover of the housing body 46c when they are seen from an axial cross section of the main shaft 33. The off-spring 401 is formed by an elastic member such as a coil spring. In Fig. 8, only one off-spring 401 is shown.

The off-spring 401 is shorter in spring length than its original state in a state that the clutch 2 is assembled. The spring length of the off-spring 401 is further shortened when the pressure plate 77 presses the plate group 66 since the plate group 77 moves in an axial direction of the main shaft 33. The off-spring 401 thereby urges the pressure plate 77 in a reverse direction of a direction that the pressure plate 77 presses the plate group 66.

The roller retainer 78 is urged toward the plate group 66 by the disc spring 83. Therefore, the plate group 66 is pressed into contact with each other by pressing force based on centrifugal force of the roller weight 41, urging force of the disc spring 83 and urging force of the spring 302. Meanwhile, the off-spring 401 generates urging force against pressing force based on centrifugal force of the roller weight 41, urging force of the disc spring 83 and urging force of the spring 302. Urging force of the off-spring 401 reduces force that the pressure plate 77 presses the pressure plate 77.

As shown in Fig. 8, the clutch 2 according to the present embodiment includes a sub clutch 120. The sub clutch 120 includes a friction plate 121, a first pressing plate (pressing member) 122 opposite to a left surface (hereinafter, first friction surface) 121a of the friction plate 121, and a second pressing plate (torque transmission member) 123 opposite to a right surface (hereinafter, second friction surface) 121 b of the friction plate 121.

The friction plate 121 is engaged with the pressure plate 77 to rotate together with the pressure plate 77. In detail, a slide arm 77c is formed in the pressure plate 77. Meanwhile, a groove (not shown) is formed in an outer portion of the friction plate 121 in a radial direction. The groove of the friction plate 121 is slidably engaged with the slide arm 77c, and the friction plate 121 is configured to rotate together with the pressure plate 77.

An outer rod (torque transmission member) 44a is serration-fitted into the first pressing plate 122. Therefore, the first pressing plate 122 rotates together with the outer rod 44a, but can move in an axial direction relative to the outer rod 44a.

An outer rod 44a is serration-fitted into the second pressing plate 123. Therefore, the second pressing plate 123 rotates together with the outer rod 44a, but can move in an axial direction relative to the outer rod 44a.

The second pressing plate 123 and the outer rod 44a forms a torque transmission member 47. The second pressing plate 123 is pressed into contact with the friction plate 121 pressed by the first pressing plate 122 when the clutch is disengaged, which will be described later. Therefore, the second pressing plate 123 receives torque from the pressure plate 77. The outer rod 44a transmits the torque received by the second pressing plate 123 from the pressure plate 77 to a power-assisting mechanism 240 which will be described later. That is, the torque transmission member 47 is pressed into contact with the pressure plate 121 pressed by the first pressing plate 122 to receive torque from the pressure plate 77 when the clutch is engaged. The torque transmission member 47 transmits the torque received from the pressure plate 77 to the power-assisting mechanism 240.

The outer rod 44a rotatably supports the pressure plate 77 through a bearing 114. The outer rod 44a and the pressure plate 77 can thereby freely make a relative rotation. The outer rod 44a, the bearing 114 and the pressure plate 77 move integrally in an axial direction. A hole 44e which penetrates in an axial direction is formed inside the outer rod 44a.

An inner rod 44b is provided in a radial direction inner portion of the outer rod 44a. The inner rod 44b passes through the hole 44e of the outer rod 44a. Therefore, the inner rod 44b and the outer rod 44a make a relative movement in an axial direction and a relative rotation in a circumferential direction of an axis.

One end of the inner rod 44b is fitted into the inside of the main shaft 33. A portion of the inner rod 44b at a right side of the one end is fitted into the bearing 115. Therefore, the inner rod 44b is supported by the bearing 115 to rotate around an axis center. A portion of the inner rod 44b is fitted into the bearing 114 through the outer rod 44a. The outer rod 44a is thereby supported by the bearing 114 so as to be rotatable around an axis center.

A stopper 116 is provided on the inner rod 44b. The stopper 116 is engaged with the inner rod 44b at a left side of the bearing 115. The stopper 116 can move in an axial direction together with the inner rod 44b.

A rack (clutch release mechanism) 44c is formed on the other end of the inner rod 44b. A pinion wheel (clutch release mechanism) 42 is also provided on the other end of the inner rod 44b. The rack 44c and the pinion wheel 42 are formed by, for example, a gear mechanism. Since the rack 44c and the pinion wheel 42 are engaged with each other, as the pinion wheel 42 operates, the rack 44c can move in an axial direction (left-right direction in Fig. 8). The rack 44c has, for example, a cylindrical shape, and a shaft of the pinion wheel 42 extends in an orthogonal direction with respect to Fig. 8. The rack 44c can rotate in a circumferential direction of an axis. In addition, a clutch release mechanism 44 is configured at least by the pinion wheel 42 and the rack 44c. The pinion wheel 42 and the rack 44c of the clutch release mechanism 44 are disposed at a right side of the power-assisting mechanism 240.

The pinion wheel 42 of the clutch release mechanism 44 is mechanically connected with a clutch lever 24. Therefore, when the clutch lever 24 is operated, the pinion wheel 42 rotates in a circumferential direction of an axis, and the inner rod 44b moves to the right in an axial direction.

If the inner rod 44b moves to the right, the bearing 115 presses the first pressing plate 122. The first pressing plate 122 thereby moves to the right together with the inner rod 44b and the bearing 115. The first pressing plate 122 presses the friction plate 121 toward the second pressing plate 113. As a result, the friction plate 121 is interposed between the first pressing plate 122 and the second pressing plate 123. Torque of the friction plate 77 is thereby transmitted to the first pressing plate 122 and the second pressing plate 123 through the friction plate 121, so that the first pressing plate 122 and the second pressing plate 123 rotate.

As shown in Fig. 8, the clutch 2 according to the present embodiment includes a power-assisting mechanism 240. The power-assisting mechanism 240 converts part of torque of the pressure plate 77 into force for disengaging the clutch 2 and decreases force necessary for disengaging the clutch 2. The power-assisting mechanism 240 according to the present embodiment is configured by a so-called ball cam. The power-assisting mechanism 240 at least includes a first cam plate 242, a second cam plate 243, a plurality of balls 241, and the outer rod 44a described above.

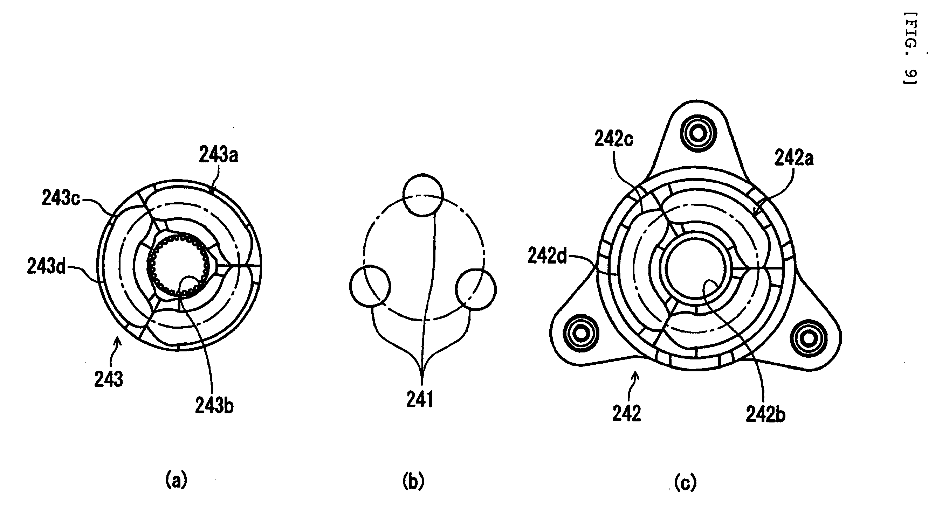

Three balls 241 are provided in the power-assisting mechanism 240. The three balls 241 are disposed between the first cam late 242 and the second cam plate 243 which are opposite to each other and so freely rolls between the first cam plate 242 and the second cam plate 243. The three balls 241 are disposed at regular intervals along a circumferential direction around an axis center of the inner rod 44b and the outer rod 44a. Here, the number of balls 241 provided in the power-assisting mechanism 240 is not limited to three. The ball 241 can move along an imaginary line (=dashed dotted line) shown in Fig. 9 as described later.

The first cam plate 242 and the second cam plate 243 have a disc-like shape. As shown in Fig. 9(c), a through hole 242b is formed at a center of the first cam plate 242. As shown in Fig. 8, the inner rod 44b and the outer rod 44a are inserted into and passes through the through hole 242b. The outer rod 44a freely moves in an axial direction and freely rotates with respect to the first cam plate 242. That is, the first cam plate 242 is configured not to rotate even though the outer rod 44a rotates. In addition, the first cam plate 242 is configured not to move even though the outer rod 44a moves in an axial direction.

As shown in Fig. 9(a), a serration hole 243b is formed at a center of the second cam plate 243. The outer rod 44a is serration-fitted into the second cam plate 243. Therefore, the second cam plate 243 freely moves in an axial direction with respect to the outer rod 44a but rotates together with the outer rod 44a.

The first cam plate 242 is latched onto a plurality of pins 210 fixed to the crankcase 31. Therefore, the second cam plate 243 is fixed with respect to the crankcase 31. In Fig. 8, only one pin 210 is shown.

As shown in Fig. 8, a stopper 251 is provided on the outer rod 44a. The stopper 251 is fixed to a right distal end of the outer rod 44a. The second cam plate 243 is restricted as to moving to the right in an axial direction with respect to the outer rod 44a by the stopper 251. That is, the outer rod 44a is restricted by the stopper 251 as to moving to the right in an axial direction with respect to the second cam plate 243.

As shown in Fig. 8, a stopper 252 is provided on the inner rod 44b. The stopper 252 is fixed to the left of the rack 44c of the inner rod 44b. The inner rod 44b is restricted to moving to the left in an axial direction with respect to the outer rod 44a. That is, the outer rod 44a is restricted by the stopper 252 as to moving to the right in an axial direction with respect to the inner rod 44b.

A first cam face 242a is formed on a right surface (a front surface in Fig. 9(c)) of the first cam plate 242. A ball receiving groove 242c is formed at one end of the second cam groove 242a. A second cam face 243a is formed on a left surface (a front surface in Fig. 9(a)) of the second cam plate 243. A ball receiving groove 243c is formed at one end of the first cam groove 243a. The ball receiving grooves 242c and the ball receiving groove 243c are deeper (left-right width in Fig. 8) than other portions of the first cam groove 242a and the second cam groove 243a, respectively. The other portion which is shallower (left-right width in Fig. 8) than the ball receiving groove 242c is shown as a ball moving groove 242d in Fig. 9(c). The other portion which is shallower (left-right width in Fig. 8) than the ball receiving groove 243c is shown as a ball moving groove 243d in Fig. 9(a).

The first cam groove 242a and the second cam groove 243a are formed so that when the second cam plate 243 rotates in a predetermined direction, the ball 241 moves up onto the ball moving groove 242d and the ball moving groove 243d from the ball receiving groove 242c and the ball receiving groove 243c, whereas when the second cam plate 243 rotates in an direction opposite to the predetermined direction, the ball 241 is received between the ball receiving groove 242c and the ball receiving groove 243c. In other words, both cam grooves 242a and 243a are formed so that both plates 242 and 243 are pressed to be separated from each other before the second cam plate 243 moves to the right when the second cam plate 243 rotates in a predetermined direction against total urging force of the disc spring 83, the off-spring 401 and the elastic member 300. In addition, both cam grooves 242a and 243a are formed so that total urging force of the disc spring 83, the off-spring 401 and the elastic member 300 moves the second cam plate 243 to the left when the second cam plate 243 rotates in a reverse direction.

Next, an operation of the clutch 2 will be described. An operation for disengaging the clutch 2 will be first described.

If a rider of the ATV9 grips the clutch lever 24 (see Fig. 1), the pinion wheel 42 rotates in a predetermined direction. As the pinion wheel 42 rotates in a predetermined direction, the inner rod 44b rotates a circumferential direction of an axis in a predetermined direction while moving it to the right. Then, the stopper 116 and the bearing 115 contact each other, and the inner rod 44b, the stopper 116 and the bearing 115 move to the right in an axial direction. The bearing 115 thereby comes into contact with the first pressing plate 122, so that the first pressing plate 122 moves to the right in an axial direction. That is, both of the inner rod 44b and the first pressing plate 122 move to the right in an axial direction. As a result, the first pressing plate 122 presses the friction plate 121. That is, the friction plate 121 of the sub clutch 120 is interposed between the first pressing plate 122 and the second pressing plate 123, so that the sub clutch 120 enters an engaged state. Accordingly, the outer rod 44a rotates in the predetermined direction together with the pressure plate 77.

If the outer rod 44a rotates in the predetermined direction, the second cam plate 243 of the power-assisting mechanism also rotates in the same direction. The three balls 241 move up onto the ball moving groove 242d and the ball moving groove 243d from the ball receiving groove 242c and the ball receiving groove 243c, respectively, and the second cam plate 243 is pressed to the right by the balls 241. The outer rod 44a is also pressed to the right thereby. As a result, force that the inner rod 44b pushes the pressure plate 77 to the right through the first pressing plate 122 and the friction plate 121 and force that the outer rod 44a draws the pressure plate 77 to the right through the bearing 115 moves the pressure plate 77 to the right. Accordingly, a press-contacted state of the plate group 66 is released, so that the clutch 2 is disengaged.

Next, an operation for engaging the clutch 2 will be described.

In order to engage the clutch 2, a rider releases the clutch lever 24 which he or she grips. Then urging force of the disc spring 83 and the elastic member 300 moves the friction plate 121 and the first pressing plate 122 of the sub clutch 120 move to the left. The friction plate 121 and the first pressing plate 122 of the sub clutch 120 are thereby separated from the second pressing plate 123. At this time, the second pressing plate 123 pressed to the right by the first pressing plate 122. Therefore, force that the inner rod 44b pushes the pressure plate 77 to the right through the first pressing plate 122 and the friction plate 121 and force that the outer rod 44a pulls the pressure plate 77 to the right through the bearing 114 are thereby released. Rightward pressing force against the outer rod 44a disappears, and the outer rod 44a moves to the left together with the pressure plate 77 and the bearing 114 which receive urging force of the disc spring 83 and the elastic member 300. In addition, a plurality of balls 241 are about to be accommodated between the ball receiving groove 242c and the ball receiving groove 243c from the ball moving groove 242d and the ball moving groove 243d. At this time, the second cam plate 243 rotates in a reverse direction of the predetermined direction. As the second cam plate 243 rotates in the reverse direction, the second cam plate 243 and the outer rod 44a move to the left.

In addition, the pressure plate 77 moves to the left by urging force of the disc spring 83 and the like since rightward pressing force of the first pressing plate 122 is released. As a result, the pressure plate 77 presses the plate group 66 into contact with each other, whereby the clutch 2 is engaged. At this time, the friction plate 121 of the sub clutch 120 is separated from the second pressing plate 123.

In the clutch 2 according to the second embodiment, urging force which the pressure plate 77 receives from the disc spring 83, the elastic member 300 and the off-spring 401 changes depending on a position in a radial direction of the roller weight 41. In detail, if a rotation speed of the pressure plate 77 is high, the roller weight 41 moves outward in a radial direction. As a result, the roller weight 41 moves to the right to greatly transform the disc spring 83, the elastic member 300 an the off-spring 401. Therefore, urging force which the pressure plate 77 receives from the disc spring 83 relatively increases because the disc spring 83 is greatly transformed by the roller weight 41 without increasing an elastic coefficient of the disc spring 83 itself. In addition, so urging force which the pressure plate 77 receives from the spring 302 relatively increases because the spring 302 is greatly transformed by the roller weight 41 without increasing an elastic coefficient of the spring 302 of the elastic member 300. In addition, urging force which the pressure plate 77 receives from the off-spring 401 is relatively greater because the off-spring 401 is greatly transformed by the roller weight 41 without increasing an elastic coefficient of the off-spring 401. Meanwhile, if a rotation speed of the pressure plate 77 is low, the roller weight 41 moves inward in a radial direction. As a result, the roller weight 41 moves to the left, and the transformation of the disc spring 83, the elastic member 300 and the off-spring 401 decreases. Therefore, urging force which the pressure plate 77 receives from the disc spring 83, the elastic member 300 and the off-spring 401 relatively decreases.

If an engine speed is high, the plate group 66 needs to be pressed into contact with each other with large pressing force by the pressure plate 77. In the clutch 2 according to the second embodiment, as an engine speed increases, the roller weight 41 moves outward in a radial direction, and the transformation of the disc spring 83 and the elastic member 300 thereby increases. Therefore, sufficient pressing force can be obtained without increasing an elastic coefficient of the disc spring 83 and the elastic member 300. Therefore, the elastic coefficient of the disc spring 83 and the elastic member 300, that is, the spring capacity, can be kept relatively small.

However, at a low speed such as an idling state, the roller weight 41 moves inward in a radial direction, and the pressure plate 77 enters a state of pressing the plate group 66 into contact with each other. That is, it enters a disengaged state. If an engine speed increases in an idling state, the roller weight 41 moves outward in a radial direction, and so it becomes a state which the pressure plate 77 presses the plate group 66 into contact with each other. That is, it enters an engaged state. However, in the clutch 2 according to the second embodiment, the elastic coefficient of the disc spring 83 and the elastic member 300 is relatively small. In addition, an engine speed is not very high at the engaged moment and the transformation of the disc spring 83 and the elastic member 300 is relatively small, and therefore, force that the pressure plate 77 presses the plate group 66 into contact with each other is relatively small. In addition, the off-spring 401 urges the pressure plate 77 in a reverse direction of a direction that the pressure plate 77 presses the plate group 66 into contact with each other. That is, the off-spring 401 urges the pressure plate 77 in an opposite direction to a direction that the disc spring 83 and the elastic member 300 urge the pressure plate 77. Therefore, the plate group 66 is not abruptly pressed into contact with each other, and the clutch 2 is smoothly connected.

Also in the second embodiment, adjusting urging force of the disc spring 83, the elastic member 300 and the off-spring 401 enables the pressure plate 77 to press the plate group 66 into contact with each other to enter a so-called partially engaged clutch state even during a low speed rotation such as an idling state.

Also in the second embodiment, adjusting urging force of the disc spring 83, the elastic member 300 and the off-spring 401 can change an engine speed when the clutch 2 is engaged, that is, a so-called meet point of the clutch 2.

The disc spring 83 applies urging force in a direction that the pressure plate 77 presses the plate group 66 into contact with each other. That is, the disc spring 83 urges the pressure plate 77 to the left. Urge force of the disc spring 83 is larger than urging force of the off-spring 401. In addition, the elastic member 300 presses the pressure plate 77 toward the plate group 66 through the elastic member retainer 79 and the roller weight 41. Therefore, the pressure plate 77 can press the plate group 66 into contact with each other by using centrifugal force of the roller weight 41. Meanwhile, adjusting urging force of the disc spring 83, the elastic member 300 and the off-spring 401 adjusts force that the pressure plate 77 presses the plate group 66 into contact with each other. It is thereby possible to change an engine speed when the clutch 2 is engaged, that is, a so-called meet point of the clutch 2.

As described above, in the clutch 2 according to the second embodiment, the torque transmission member 47 includes the outer rod 44a and the second pressing plate 123. In addition, the clutch 2 according to the present embodiment includes the inner rod 44b. The inner rod 44b is received by the hole 44e of the outer rod 44a to move in an axial direction relative to the outer rod 44a and moves in an axial direction to press the first pressing plate 122 to the friction plate 121. The inner rod 44b includes the rack 44c. The inner rod 44b is pulled in an axial direction (left-right direction in Fig. 8) according to rotation of the pinion wheel 42 as the rack 44c and the pinion wheel 42 are engaged with each other. That is, the pinion wheel 42 rotates to move the rack 44c. As a result, the inner rod 44b moves to the right in an axial direction. In addition, in the second embodiment, the clutch release mechanism 44 is configured at least by the pinion wheel 42 and the rack 44c. Therefore, as the clutch release mechanism 44 pulls the inner rod 44b in an axial direction, the inner rod 44b moves in an axial direction. At this time, the inner rod 44b moves to the right as shown in Fig. 6.

The rack 44c and the pinion wheel 42 of the clutch release mechanism 44 are disposed at a right side of the power-assisting mechanism 240. That is, as shown in Fig. 8, the rack 44c and the pinion wheel 42 of the clutch release mechanism 44 are disposed outside the vehicle body. Therefore, the pinion wheel 42 and the clutch lever 24 are easily connected.

As described above, the present teaching is useful for the friction clutch and the vehicle having the same.

The description above discloses (among others) an embodiment of a friction clutch, comprising: a drive side rotator having a first plate; a driven side rotator having a second plate opposite to the first plate in a predetermined direction; a pressure plate which rotates together with the drive side rotator and moves in the predetermined direction to contact the first plate and the second plate with each other; a power-assisting mechanism which receives torque of the pressure plate when a clutch is disengaged, and converts the torque into force for moving the pressure plate in a direction which separates the first plate and the second plate from each other; and a centrifugal weight which moves outward in a radial direction of the pressure plate by the movement amount according to the magnitude of centrifugal force and presses the pressure plate in a direction for contacting the first plate and the second plate by force according to the movement amount.

Preferably, the pressure plate is supported or connected to the drive side rotator to rotate according to the drive side rotator, a cam face which guides the centrifugal weight in a direction which draws apart from the first plate and the second plate as the centrifugal weight moves more outward in a radial direction is formed on an opposite surface to the first plate and the second plate of the pressure plate, and the friction clutch further comprises an abutment member which is disposed opposite to the cam face of the pressure plate through the centrifugal weight and applies repulsive force of a direction facing the cam face to the centrifugal weight when the centrifugal weight abuts.

Further, preferably the pressure plate is supported or connected to the drive side rotator to rotate according to the drive side rotator, and the friction clutch further comprises a sub clutch including: a friction plate which is provided to rotate together with the pressure plate and has a first friction surface provided one side of the predetermined direction and a second friction surface provided on the other side, a pressing member which comes into contact with the first friction surface and presses the friction plate from one side of the predetermined direction toward the other side when a clutch is disengaged, and a torque transmission member which is opposite to the second friction surface of the friction plate and is pressed into contact with the friction plate pressed by the pressing member to receive torque of the pressure plate and to transmit the torque to the power-assisting mechanism when a clutch is disengaged.

Further, preferably the drive side rotator is a clutch housing formed in a cylindrical shape, the driven side rotator is a clutch boss disposed at an inner side of a radial direction of the clutch housing, a cam face which guides the centrifugal weight in a direction which draws apart from the first plate and the second plate as the centrifugal weight moves more outward in a radial direction is formed on an opposite surface to the first plate and the second plate of the pressure plate, an abutment member which is disposed opposite to the cam face of the pressure plate through the centrifugal weight and applies repulsive force of a direction facing the cam face to the centrifugal weight when the centrifugal weight abuts is supported in the clutch housing, and the sub clutch is disposed between the clutch boss and the abutment member with regard to the predetermined direction.

Further, preferably a rotation shaft has a hole extending in an axial direction and is supported or connected to the driven side rotator to rotate according to the driven side rotator; and an operating shaft is at least partially inserted into the hole of the rotation shaft and pushes the pressing member from one side of the predetermined direction to the other side when a clutch is disengaged, wherein an oil supply path for supplying oil to the sub clutch is formed inside the operating shaft.

Further, preferably the torque transmission member includes an outer rod which has a hole passing through in an axial direction formed therein and rotates in a circumferential direction of an axis to transmit torque of the pressure plate to the power-assisting mechanism, and the friction clutch further comprises: an inner rod which is received by the hole of the outer rod to freely move relative to the outer rod in an axial direction and moves in an axial direction to press the pressing member to the friction plate; and a clutch release mechanism which is at least partially disposed at the other side of the power-assisting mechanism and pulls the inner rod in an axial direction to move the inner rod in an axial direction when a clutch is disengaged.

Further, preferably a rotation shaft has a hole extending in an axial direction and is connected to the driven side rotator to rotate according to the driven side rotator; an operating shaft is at least partially inserted into the hole of the rotation shaft and pushes the pressing member from one side of the predetermined direction to the other side to press the pressing member to the pressure plate when a clutch is disengaged; a slide shaft is provided at the other side of the operating shaft and rotates according to the torque transmission member to transmit torque of the pressure plate to the power-assisting mechanism; and a clutch release mechanism operates the operating shaft to move the pressing member from one side of the predetermined direction to the other side.

Further, preferably the power-assisting mechanism is a ball cam.

Further, preferably the drive side rotator includes a plurality of first plates, the driven side rotator includes a plurality of second plates, and the plurality of first plates and the plurality of second plates are alternately disposed in the predetermined direction.

Further, preferably a vehicle comprises a friction clutch according to one of the preceding embodiments.

In order to reduce not only an operational load necessary for disengaging a clutch but also a shock occurring when a clutch is engaged in an idling state in a friction clutch for a motorcycle and the like, an embodiment of a clutch 2 includes a clutch housing 46 having a friction plate 64, a clutch boss 48 having a clutch plate 65, a pressure plate 77, a sub clutch 100, and a power-assisting mechanism 200. The power-assisting mechanism 200 receives torque of the pressure plate 77 when a clutch is disengaged and converts the torque into force for moving the pressure plate in a direction which separates the pressure plate 77 from a plate group 66. A cam face 81 which supports and guides a roller weight 41 is formed in the pressure plate 77. The roller weight 41 moves outward in a radial direction by the movement amount according to the magnitude of centrifugal force and presses the pressure plate 77 toward the plate group 66 with force according to the movement amount.

## Claims

1. Friction clutch, comprising:
a drive side rotator (46) having at least one first plate (64);
a driven side rotator (48) having at least one second plate (65) opposite to the first plate (64) in a predetermined direction;
a pressure plate (77) configured to rotate together with the drive side rotator (46) and to move in the predetermined direction to contact the first plate (64) and the second plate (65) with each other;
a centrifugal weight (41) configured to move outward in radial direction of the pressure plate (77) by a movement amount corresponding to a centrifugal force acting on the centrifugal weight (41) and to press the pressure plate (77) in a direction for contacting the first plate (64) and the second plate (65) by a force corresponding to the movement amount;
**characterised in that** it further comprises
a power-assisting mechanism (200,240) configured to receive a torque of the pressure plate (77) when the friction clutch (2) is disengaged, and to convert the torque into a force for moving the pressure plate (77) to separate the first plate (64) and the second plate (65) from each other.

2. Friction clutch according to claim 1, wherein the pressure plate (77) is supported or connected to the drive side rotator (46) to rotate according to the drive side rotator (46).

3. Friction clutch according to claim 1 or 2, wherein a cam face (81) is formed on the pressure plate (77) on an opposite surface facing away from the first plate (64) and the second plate (65), the cam face (81) being configured to guide the centrifugal weight (41) in a direction to draw apart the first plate (64) and the second plate (65) from each other as the centrifugal weight (41) moves outward in radial direction of the pressure plate (77).

4. Friction clutch according to claim 3, wherein the centrifugal weight (41) is located between an abutment member (70) and the pressure plate (77), said abutment member (70) being configured to apply a repulsive force to the centrifugal weight (41) toward the cam face (81) when the centrifugal weight (41) abuts.

5. Friction clutch according to one of claims 1 to 4, wherein the friction clutch (2) comprises a sub clutch (100,120) including: a friction plate (101,121) configured to rotate together with the pressure plate (77) and having a first friction surface (101a,121a) provided on one side of the predetermined direction and a second friction surface (101b,121b) provided on the other side, and, preferably, a pressing member (102,122) configured to come into contact with the first friction surface (101a,121a) and to press the friction plate (101,121) from one side of the predetermined direction toward the other side when the friction clutch (2) is disengaged, and, preferably, a torque transmission member (103,123) which is opposite to the second friction surface (101b,121b) of the friction plate (101,121) and which is configured to be pressed into contact with the friction plate (101,121) pressed by the pressing member (102,122) to receive torque of the pressure plate (77) and to transmit the torque to the power-assisting mechanism (200,240) when the friction clutch (2) is disengaged.

6. Friction clutch according to one of claims 1 to 5, wherein the drive side rotator (46) is a clutch housing formed in a substantially cylindrical shape, and the driven side rotator (48) is a clutch boss disposed at an inner side of a radial direction of the clutch housing.

7. Friction clutch according to claim 6, wherein the abutment member (70) is supported in the clutch housing, and/or the sub clutch (100,120) is disposed between the clutch boss and the abutment member (70) with regard to the predetermined direction.

8. Friction clutch according to one of claims 1 to 7, wherein a rotation shaft (33) is supported or connected to the driven side rotator (48) to rotate according to the driven side rotator (48), wherein a hole (33a) extends in axial direction of the rotation shaft (33), and, preferably, an operating shaft (43a) is at least partially inserted into the hole (33a) of the rotation shaft (33) to push the pressing member (102) from one side of the predetermined direction to the other side when the friction clutch (2) is disengaged.

9. Friction clutch according to claim 8, wherein an oil supply path (110) configured to supply oil to the sub clutch (100) is formed inside the operating shaft (43a).

10. Friction clutch of claim 8 or 9, wherein a slide shaft (201) is provided at the other side of the operating shaft (43a) and is configured to rotate according to the torque transmission member (103) to transmit torque of the pressure plate (77) to the power-assisting mechanism (200), and/or a clutch release mechanism (86) is configured to operate the operating shaft (43a) to move the pressing member (102) from one side of the predetermined direction to the other side.

11. Friction clutch according to one of claims 5 to 7, wherein the torque transmission member (123) includes an outer rod (44a) having a hole (44e) passing through in axial direction thereof and being configured to rotate in circumferential direction of an axis to transmit torque of the pressure plate (77) to the power-assisting mechanism (240), and, preferably an inner rod (44b) is received by the hole (44e) of the outer rod (44a) to freely move relative to the outer rod (44a) in axial direction and to press the pressing member (122) to the friction plate (121), and, preferably, a clutch release mechanism (44) is at least partially disposed at the other side of the power-assisting mechanism (240) and is configured to pull the inner rod (44b) in axial direction when the friction clutch (2) is disengaged.

12. Friction clutch according to one of claims 1 to 11, wherein the power-assisting mechanism (200,240) is a ball cam.

13. Friction clutch according to one of claims 1 to 12, wherein the drive side rotator (46) includes a plurality of first plates (64), the driven side rotator (48) includes a plurality of second plates (65), and the plurality of first plates (64) and the plurality of second plates (65) are alternately disposed in the predetermined direction.

14. Vehicle comprising a friction clutch according to one of claims 1 to 13.

## Patentansprüche

1. Reibungskupplung, aufweisend:
einen Antriebsseite- Rotationseinrichtung (46) mit zumindest einer ersten Platte (64);
einen Abtriebsseite- Rotationseinrichtung (48) mit zumindest einer zweiten Platte (65), gegenüberliegend zu der ersten Platte (64) in einer vorbestimmten Richtung; eine Druckplatte (77), konfiguriert, gemeinsam mit der Antriebsseite- Rotationseinrichtung (46) zu rotieren und sich in die vorbestimmte Richtung zu bewegen, um die erste Platte (64) und die zweite Platte (65) miteinander in Kontakt zu bringen, ein Fliehkraftgewicht (41), konfiguriert, sich nach außen in radialer Richtung der Druckplatte (77) durch eine Bewegungsgröße zu bewegen, die einer Fliehkraft entspricht, die auf das Fliehkraftgewicht (41) wirkt, und um die Druckplatte (77) in eine Richtung zum Kontaktieren der ersten Platte (64) und der zweiten Platte (65) durch eine Kraft zu pressen, die der Bewegungsgröße entspricht;
**dadurch gekennzeichnet, dass** sie außerdem eine leistungsunterstützende Vorrichtung (200, 240) aufweist, konfiguriert, ein Drehmoment der Druckplatte (77) aufzunehmen, wenn die Reibungskupplung (2) außer Eingriff ist, und das Drehmoment in eine Kraft zum Bewegen der Druckplatte (77) umzuwandeln, um die erste Platte (64) und die zweite Platte (65) voneinander zu trennen.

2. Reibungskupplung nach Anspruch 1, wobei die Druckplatte (77) mit der Antriebsseite- Rotationseinrichtung (46) gelagert oder verbunden ist, um entsprechend mit der Antriebsseite- Rotationseinrichtung (46) zu rotieren.

3. Reibungskupplung nach Anspruch 1 oder 2, wobei eine Nockenfläche (81) an der Druckplatte (77) auf einer gegenüberliegenden Oberfläche gebildet ist, die sich von der ersten Platte (64) und der zweiten Platte (65) wegwendet, wobei die Nockenfläche (81) konfiguriert ist, das Fliehkraftgewicht (41) in eine Richtung zu führen, um die erste Platte (64) und die zweite Platte (65) voneinander weg zu ziehen, wenn sich das Fliehkraftgewicht (41) nach außen in radialer Richtung der Druckplatte (77) bewegt.

4. Reibungskupplung nach Anspruch 3, wobei das Fliehkraftgewicht (41) zwischen einem Anschlagteil (70) und der Druckplatte (77) angeordnet ist, wobei das Anschlagteil (70) konfiguriert ist, eine abstoßende Kraft gegenüber dem Fliehkraftgewicht (41) in Richtung zu der Nockenfläche (81) aufzubringen, wenn das Fliehkraftgewicht (41) anliegt.

5. Reibungskupplung nach einem der Ansprüche 1 bis 4, wobei die Reibungskupplung (2) eine Sub- Kupplung (100, 120) aufweist, die eine Reibungsplatte (101, 121) enthält, konfiguriert, gemeinsam mit der Druckplatte (77) zu rotieren, und eine erste Reibungsoberfläche (101 a, 121 a), vorgesehen auf einer Seite der vorbestimmten Richtung, und eine zweite Reibungsoberfläche (101b, 121b), vorgesehen auf der anderen Seite, und, vorzugsweise ein Pressteil (102, 122), konfiguriert, in Kontakt mit der ersten Reibungsoberfläche (101a, 121a) zu kommen und die Reibungsplatte (101, 121) von einer Seite der vorbestimmten Richtung in Richtung zu der anderen Seite zu pressen, wenn die Reibungskupplung (2) außer Eingriff ist, und, vorzugsweise, ein Drehmomentübertragungsteil (103, 123), das zu der zweiten Reibungsoberfläche (101b, 121b) der Reibungsplatte (101, 121) gegenüberliegend ist und das konfiguriert ist, um mit der Reibungsplatte (101, 121) durch das Pressteil (102, 122) in Kontakt gepresst zu sein, gepresst durch das Pressteil (102, 122), um ein Drehmoment der Druckplatte (77) aufzunehmen und das Drehmoment auf die leistungsunterstützende Vorrichtung (200, 240) zu übertragen, wenn die Reibungskupplung (2) außer Eingriff ist.

6. Reibungskupplung nach einem der Ansprüche 1 bis 5, wobei die Antriebsseite-Rotationseinrichtung (46) ein Kupplungsgehäuse ist, gebildet in einer im Wesentlichen zylindrischen Form, und die Abtriebsseite- Rotationseinrichtung (48) eine Kupplungsnabe ist, angeordnet auf einer inneren Seite einer radialen Richtung des Kupplungsgehäuses.

7. Reibungskupplung nach Anspruch 6, wobei das Anschlagteil (70) in dem Kupplungsgehäuse gelagert ist und / oder die Sub- Kupplung (100, 120) zwischen der Kupplungsnabe und dem Anschlagteil (70) in Bezug auf die vorbestimmte Richtung angeordnet ist.

8. Reibungskupplung nach einem der Ansprüche 1 bis 7, wobei eine Drehwelle (33) an der Abtriebsseite- Rotationseinrichtung (48) gelagert oder verbunden ist, um sich entsprechend zu der Abtriebsseite- Rotationseinrichtung (48) zu drehen, wobei sich eine Bohrung (33a) in einer axialen Richtung der Drehwelle (33) erstreckt, und, vorzugsweise, eine Betätigungswelle (43a) zumindest teilweise in die Bohrung (33a) der Drehwelle (33) eingesetzt ist, um das Pressteil (102) von einer Seite der vorbestimmten Richtung zu der anderen Seite zu drücken, wenn die Reibungskupplung (2) außer Eingriff ist.

9. Reibungskupplung nach Anspruch 8, wobei ein Ölzuführungspfad (110), konfiguriert, Öl zu der Sub- Kupplung (100) zuzuführen, im Inneren der Betätigungswelle (43a) gebildet ist.

10. Reibungskupplung nach Anspruch 8 oder 9, wobei eine Gleitwelle (201) auf der anderen Seite der Betätigungswelle (43a) vorgesehen ist und so konfiguriert ist, sich entsprechend des Drehmomentübertragungsteils (103) zu drehen, um ein Drehmoment der Druckplatte (77) auf die leistungsunterstützende Vorrichtung (200) zu übertragen, und / oder eine Kupplungslösevorrichtung konfiguriert ist, die Betätigungswelle (43a) zu betätigen, das Pressteil (102) von einer Seite der vorbestimmten Richtung zu der anderen Seite zu bewegen.

11. Reibungskupplung nach einem der Ansprüche 5 bis 7, wobei das Drehmomentübertragungsteil (123) einen äußeren Stab (44a) mit einer Bohrung (44a) hat, der in axialer Richtung desselben hindurchgeht und konfiguriert ist, sich in Umfangsrichtung einer Ache zu drehen, um ein Drehmoment der Druckplatte (77) zu der leistungsunterstützende Vorrichtung (240) zu übertragen und, vorzugsweise ist ein innerer Stab (44b) durch die Bohrung (44e) des äußeren Stabs (44a) aufgenommen, um sich frei in Bezug a8uf den äußeren Stab (44a) in axialer Richtung zu drehen und das Pressteil (122) an die Reibungsplatte (121) zu pressen, und. vorzugsweise, ist eine Kupplungslösevorrichtung (44) zumindest teilweise an der Außenseite der leistungsunterstützende Vorrichtung (240) angeordnet und konfiguriert, den inneren Stab (44b) in axialer Richtung zu ziehen, wenn die Reibungskupplung (2) außer Eingriff ist.

12. Reibungskupplung nach einem der Ansprüche 1 bis 11, wobei die leistungsunterstützende Vorrichtung (200, 240) ein Kugelnocken ist.

13. Reibungskupplung nach einem der Ansprüche 1 bis 12, wobei die Antriebsseite-Rotationseinrichtung (46) eine Mehrzahl von ersten Platten (64) enthält, die Abtriebsseite- Rotationseinrichtung (48) eine Mehrzahl von zweiten Platten (65) enthält und die Mehrzahl der ersten Platten (64) und die Mehrzahl der zweiten Platten (65) in der vorbestimmten Richtung alternierend angeordnet ist.

14. Fahrzeug, aufweisend eine Reibungskupplung, nach einem der Ansprüche 1 bis 13.

## Revendications

1. Embrayage à friction, comprenant :
un rotateur côté entraînement (46) muni d'au moins une première plaque (64) ;
un rotateur côté entraîné (48) muni d'au moins une deuxième plaque (65) opposée à la première plaque (64) selon une direction prédéterminée ;
une plaque de compression (77) configurée pour tourner conjointement avec le rotateur côté entraînement (46) et pour se déplacer dans la direction prédéterminée afin de mettre la première plaque (64) en contact avec la deuxième plaque (65) ;
une masselotte (41) configurée pour se déplacer vers l'extérieur en direction radiale de la plaque de compression (77) selon une quantité de déplacement correspondant à une force centrifuge agissant sur la masselotte (41), et pour pousser la plaque de compression (77) dans une direction de mise en contact de la première plaque (64) avec la deuxième plaque (65) avec une force correspondant à la quantité de déplacement ;
**caractérisé en ce qu'**il comprend en outre
un mécanisme d'actionnement assisté (200, 240) configuré pour recevoir un couple de la plaque de compression (77) lorsque l'embrayage à friction (2) est débrayé, et pour convertir le couple en une force de déplacement de la plaque de compression (77) pour séparer la première plaque (64) et la deuxième plaque (65) l'une de l'autre.

2. Embrayage à friction selon la revendication 1, dans lequel la plaque de compression (77) est supportée par le rotateur côté entraînement (46) ou connectée à celui-ci pour tourner par rapport au rotateur côté entraînement (46).

3. Embrayage à friction selon la revendication 1 ou 2, dans lequel une face de came (81) est formée sur la plaque de compression (77) sur une surface opposée orientée à l'opposé de la première plaque (64) et de la deuxième plaque (65), la face de came (81) étant configurée pour guider la masselotte (41) dans une direction permettant l'écartement de la première plaque (64) par rapport à la deuxième plaque (65) lorsque la masselotte (41) se déplace vers l'extérieur en direction radiale de la plaque de compression (77).

4. Embrayage à friction selon la revendication 3, dans lequel la masselotte (41) est située entre un élément de butée (70) et la plaque de compression (77), ledit élément de butée (70) étant configuré pour exercer une force répulsive sur la masselotte (41) vers la face de came (81) lorsque la masselotte (41) vient à butée.

5. Embrayage à friction selon l'une des revendications 1 à 4, dans lequel l'embrayage à friction (2) comprend un sous-embrayage (100, 120) comportant :
une plaque de friction (101, 121) configurée pour tourner conjointement avec la plaque de compression (77) et munie d'une première surface de friction (101a, 121a) pourvue d'un côté de la direction prédéterminée et une deuxième surface de friction (101b, 121b) pourvue de l'autre côté, et, de préférence, un élément de compression (102, 122) configuré pour entrer en contact avec la première surface de friction (101a, 121a) et pour pousser la plaque de friction (101, 121) d'un côté de la direction prédéterminée vers l'autre côté lorsque l'embrayage à friction (2) est débrayé, et, de préférence, un élément de transmission de couple (103, 123) qui est opposé à la deuxième surface de friction (101b, 121b) de la plaque de friction (101, 121) et qui est configuré pour être poussé en contact avec la plaque de friction (101, 121) comprimée par l'élément de compression (102, 122) pour recevoir un couple de la plaque de compression (77) et pour transmettre le couple au mécanisme d'actionnement assisté (200, 240) lorsque l'embrayage à friction (2) est débrayé.

6. Embrayage à friction selon l'une des revendications 1 à 5, dans lequel le rotateur côté entraînement (46) est un carter d'embrayage réalisé selon une forme sensiblement cylindrique, et le rotateur côté entraîné (48) est une noix d'embrayage disposée sur un côté interne d'une direction radiale du carter d'embrayage.

7. Embrayage à friction selon la revendication 6, dans lequel l'élément de butée (70) est supporté dans le carter d'embrayage, et/ou le sous-embrayage (100, 120) est disposé entre la noix d'embrayage et l'élément de butée (70) par rapport à la direction prédéterminée.

8. Embrayage à friction selon l'une des revendications 1 à 7, dans lequel un arbre de rotation (33) est supporté ou connecté au rotateur côté entraîné (48) pour tourner par rapport au rotateur côté entraîné (48), dans lequel un trou (33a) s'étend en direction axiale de l'arbre de rotation (33), et, de préférence, un arbre d'actionnement (43a) est inséré au moins partiellement dans le trou (33a) de l'arbre de rotation (33) pour pousser l'élément de compression (102) d'un côté de la direction prédéterminée vers l'autre côté lorsque l'embrayage à friction (2) est débrayé.

9. Embrayage à friction selon la revendication 8, dans lequel un passage d'alimentation d'huile (110), configuré pour alimenter de l'huile au sous-embrayage (100), est réalisé à l'intérieur de l'arbre d'actionnement (43a).

10. Embrayage à friction selon la revendication 8 ou 9, dans lequel un arbre coulissant (201) est pourvu de l'autre côté de l'arbre d'actionnement (43a) et est configuré pour tourner par rapport à l'élément de transmission de couple (103) pour transmettre un couple de la plaque de compression (77) au mécanisme d'actionnement assisté (200), et/ou un mécanisme de débrayage (86) est configuré pour actionner l'arbre d'actionnement (43a) afin de déplacer l'élément de compression (102) d'un côté de la direction prédéterminée vers l'autre côté.

11. Embrayage à friction selon l'une des revendications 5 à 7, dans lequel l'élément de transmission de couple (123) comprend un axe externe (44a) pourvu d'un trou (44e) qui le traverse en direction axiale et est configuré pour tourner en direction circonférentielle d'un axe pour transmettre un couple de la plaque de compression (77) au mécanisme d'actionnement assisté (240), et, de préférence, un axe interne (44b) est logé dans le trou (44e) de l'axe externe (44a) pour se déplacer librement par rapport à l'axe externe (44a) en direction axiale et pour pousser l'élément de compression (122) contre la plaque de friction (121), et, de préférence, un mécanisme de débrayage (44) est au moins partiellement disposé sur l'autre côté du mécanisme d'actionnement assisté (240) et est configuré pour tirer l'axe interne (44b) en direction axiale lorsque l'embrayage à friction (2) est débrayé.

12. Embrayage à friction selon l'une des revendications 1 à 11, dans lequel le mécanisme d'actionnement assisté (200, 240) est une came à bille.

13. Embrayage à friction selon l'une des revendications 1 à 12, dans lequel le rotateur côté entraînement (46) comporte une pluralité de premières plaques (64), le rotateur côté entraîné (48) comporte une pluralité de deuxièmes plaques (65), et la pluralité de premières plaques (64) et la pluralité de deuxièmes plaques (65) sont disposées de manière alternée dans la direction prédéterminée.

14. Véhicule comprenant un embrayage à friction selon l'une des revendications 1 à 13.
